(19) Europäisches Patentamt
European Patent Office
Office européen des brevets

(11) **EP 2 035 996 B1**

(12) **EUROPEAN PATENT SPECIFICATION**

(45) Date of publication and mention
of the grant of the patent:
**21.03.2012 Bulletin 2012/12**

(21) Application number: **07809778.9**

(22) Date of filing: **21.06.2007**

(51) Int Cl.:
*G06F 21/00* (2006.01)    *H04L 29/06* (2006.01)

(86) International application number:
**PCT/US2007/014506**

(87) International publication number:
**WO 2008/002456 (03.01.2008 Gazette 2008/01)**

(54) **PROGRAM INSTRUMENTATION METHOD AND APPARATUS FOR CONSTRAINING THE BEHAVIOR OF EMBEDDED SCRIPT IN DOCUMENTS**

VERFAHREN UND VORRICHTUNG ZUR INSTRUMENTIERUNG EINES PROGRAMMS ZUR EINSCHRÄNKUNG DES VERHALTENS EINGEBETTETER SKRIPTE IN DOKUMENTEN

PROCÉDÉ ET APPAREIL D'INSTRUMENTATION DE PROGRAMME POUR CONTRAINDRE LE FONCTIONNEMENT D'UN SCRIPT IMBRIQUÉ DANS DES DOCUMENTS

(84) Designated Contracting States:
**DE FR GB**

(30) Priority: **26.06.2006 US 816679 P**
**20.06.2007 US 765918**

(43) Date of publication of application:
**18.03.2009 Bulletin 2009/12**

(73) Proprietor: **NTT DoCoMo, Inc.**
**Chiyoda-Ku**
**Tokyo 100-6150 (JP)**

(72) Inventors:
• **YU, Dachuan**
**Santa Clara, CA 95051 (US)**
• **CHANDER, Ajay**
**San Francisco, CA 94110 (US)**
• **ISLAM, Nayeem**
**Palo Alto, CA 94303 (US)**

(74) Representative: **Bartle, Robin Jonathan**
**W.P. Thompson & Co.**
**Coopers Building**
**Church Street**
**Liverpool**
**L1 3AB (GB)**

(56) References cited:
**WO-A-2006/025050     WO-A2-2007/011579**

• **JAY LIGATTI ET AL: "Edit automata: enforcement mechanisms for run-time security policies" INTERNATIONAL JOURNAL OF INFORMATION SECURITY, SPRINGER-VERLAG, BE, vol. 4, no. 1-2, 1 February 2005 (2005-02-01), pages 2-16, XP019356770 ISSN: 1615-5270**
• **MAEBE J ET AL: "Instrumenting self-modifying code", 5TH INTERNATIONAL WORKSHOP ON AUTOMATED AND ALGORITHMIC DEBUGGING,, 1 September 2003 (2003-09-01), pages 103-114, XP007912826,**

**Description**

## FIELD OF THE INVENTION

The present invention relates to the field of computer programming; more particularly, the present invention relates to controlling (e.g., constraining) the behavior of embedded script in documents (e.g., HTML documents).

## BACKGROUND OF THE INVENTION

JavaScript has become a popular tool in building web pages. JavaScript programs are essentially a form of mobile code embedded in HTML documents and executed on client machines. With help of the Document Object Model (DOM) and other browser features, JavaScript programs can obtain restricted access to the client system and improve the functionality and appearance of web pages.

As is the case of other forms of mobile code, JavaScript programs introduce potential security vulnerabilities and loopholes for malicious parties to exploit. As a simple example, JavaScript is often used to open a new window on the client. This feature provides a degree of control beyond that offered by plain HTML alone, allowing the new window to have customized size, position, and components (e.g., menu, toolbar, status bar). Unfortunately, this feature has been heavily exploited to generate annoying pop-ups of undesirable contents, some of which are difficult to "control" from a web user's point of view (e.g., control buttons out of screen boundary, instant respawning when closed). More severely, this feature has also been exploited for launching phishing attacks, where key information about the origin of the web page is hidden from users (e.g., a hidden location bar), and false information assembled to trick users into believing malicious contents (e.g., a fake location bar).

As another example, JavaScript is often used to store and retrieve useful information (e.g., a password to a web service) on the client machine as a "cookie." Such information is sometimes sensitive, and therefore the browser restricts the access to cookies based on the origin of web pages. For instance, JavaScript code from attacker.com will not be able to read a cookie set by mybank.com. Unfortunately, many web applications exhibit XSS vulnerabilities, where a malicious piece of script can be injected into a web page produced by a vulnerable application. The browser interprets the injected script as if it was intended by the same application. As a result, the browser's origin-based protection is circumvented, and the malicious script may obtain access to the cookie set by the vulnerable application.

Thus, in general, JavaScript has been exploited to launch a wide range of attacks. The situation is potentially worse than for other forms of mobile code such as application downloading, because the user may not realize that loading web pages entails the execution of untrusted code.

JavaScript, DOM, and web browsers provide some basic security protections. Among the commonly used are sandboxing, same-origin policy, and signed scripting. These only provide limited (coarse-grained) protections. There remain many opportunities for attacks, even if these protections are perfectly implemented. Representative example attacks that are not prevented by these include XSS, phishing, and resource abuse.

There have been also some separate browser security tools developed, such as pop-up blockers and Spoof-Guard. These separate solutions only provide protection against specific categories of attacks. In practice, it is sometimes difficult to deploy multiple solutions all together. In addition, there are many attacks that are outside of the range of protection of existing tools. Nonetheless, ideas and heuristics used in these tools are likely to be helpful for constructing useful security policies for instrumentation.

Some schemes in the context of client-side protection against malicious mobile code, including those written in JavaScript, have been proposed. They provide only coarse-grained protection by conducting some checks on the security profile of downloaded code (e.g., based on known hostile downloadables, trusted and untrusted URLs, and suspicious code patterns), and by preventing the execution of the code when the checks fail. Some also scan the content of the code for potential exploits based on a set of rules. None of these prior protection methods rewrite the code. The protection provided by an embodiment of the present invention is more fine-grained, because the method inspects the code for its behaviors and rewrites the code to respect the policy.

All of the above mentioned protection mechanisms are deployed on the client side. Server-side protection has also been studied, especially in the context of command injection attacks. They help well-intended programmers to build web applications that are free of certain vulnerabilities, but cannot prevent malicious code from harming the client through browser-based attacks.

Existing academic work on formalizing JavaScript focuses on helping programmers write good code, as opposed to thwarting malicious exploits. On the technical aspects, they treat JavaScript programs using the conventional program execution model, rather than as separate fragments embedded in HTML documents. They have not addressed higher-order script, which is a form of JavaScript code not directly available statically, but rather generated dynamically during JavaScript program execution.

Program instrumentation is well-known. However, these previous techniques address specific questions including memory safety, debugging and testing, and data collection. They do not address browser safety and security questions. In addition, they are not sufficient for regulating the behavior of embedded JavaScript in HTML documents.

International patent application PCT/IL2005/000915, published under WO2006/025050A in the name of Finjan Software Limited, describes adaptive rule-based content scanning including identifying tokens in an incoming byte stream, the tokens being lexical constructs for a specific language. Patterns of tokens are identified, generating a parse tree, and potential exploits within the parse tree are identified.

A paper by J. Ligatti et al. entitled "Edit Automata: Enforcement Mechanisms for Run Time Security Policies" (in International Journal of Information Security Springer-Verlag DE, Volume 4, No. 1-2, pages 2-16, XP019356770ISSN: 1615-5270) describes the class of abstract machines known as edit automata which examine the sequence of actions performed by application programs and alter that sequence when deviations from a specified policy are detected.

WO 2007/011579 A2 (Microsoft Coip) was not prior published but was cited by the European Patent Office during prosecution of this case and concerns a method which transforms or immunizes information to reduce or eliminate risk of exploitation of a known vulnerability of a software service. It includes receiving information in response to a request, transforming the information to produce transformed information, and sending the transformed information.

Maebe J Et Al: "Instrumenting self modifying code" 5th International Workshop on Automated and Algorithmic Debugging, 1 September 2003 (2003-09-01), pages 103-114, XP007912826 describes a technique for instrumenting self-modifying code that uses the hardware page protection mechanism of modern processors to detect modifications.

## SUMMARY OF THE INVENTION

According to the present invention, there is a method comprising: downloading a document with a script program embedded therein, wherein the script program comprises self-modifying code; inspecting the script program; rewriting, by a rewriting module using a syntax-directed rewriting process, the script program prior to run-time and at run-time, wherein rewriting the script program comprises: inserting a run-time check into the script program, the run-time check comprising code, which when executed, causes an expression corresponding to the document to be evaluated at run-time and causes the document to be sent through the rewriting module, which instruments the script program in the document at run-time based on a result of evaluating the expression, and adding code to redirect an action through a policy module during run-time execution to cause behavior resulting from execution of the instrumented script program to conform to one or more policies defining safety and security, the one or more policies being expressed as edit automata.

According to another aspect of the present invention, there is a proxy comprising: a policy management module to implement one or more policies defining safety and security; a rewriting module to perform a syntax-directed rewriting process to rewrite a script program embedded in a document prior to run-time and at run-time, wherein the script program comprises self-modifying code, wherein the rewriting module performs rewriting of the script program by inserting a run-time check into the script program; an interpretation module to interpret the script program rewritten by the rewriting module, wherein the run-time check comprises code, which when executed at run-time, causes an expression corresponding to the document to be evaluated at nm-time and causes the document generated by the interpretation module at run-time to be sent through the rewriting module, which instruments the script program in the document based on results of evaluating the document and adds code to redirect an action through a policy module during run-time to cause the behavior resulting from execution of the instrument script program to conform to the one or more policies, the one or more policies being expressed as edit automata.

According to still another aspect of the present invention, there is an article of manufacture having one or more machine-readable media storing instructions which, when executed by a machine, cause the machine to:- download a document with a script program embedded therein, wherein the script program comprises self modifying code; inspect the script program; and rewrite the script program using a syntax-directed rewriting process prior to run-time and at run-time, wherein rewrite the script program comprises: insert at least one run-time check into the script program wherein the run-time check comprises code, which when executed at run-time causes an expression corresponding to the document to be evaluated at run-time and causes the document to be sent through a rewriting module (1401), which instruments the script program in the document based on results of evaluating the document and adds code to redirect an action through a policy module during run-time to cause behavior resulting from execution of the instrumented script program to conform to one or more policies defining safety and security, the one or more policies being expressed as edit automata. document to be sent through a rewriting module, which instruments the script program in the document based on results of evaluating the document,

wherein behavior resulting from execution of the instrumented script program conforms to one or more policies defining safety and security, the one or more policies being expressed as edit automata. policies defining safety and security.

The script program comprises self-modifying code (e.g., dynamically generated script).

EP 2 035 996 B1

## BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.

**Figure 1** illustrates an example of script embedded in an HTML document;

**Figure 2** illustrates an example of an execution order of higher-order script;

**Figure 3A** is a flow diagram of one embodiment of a process for instrumenting script programs embedded in documents;

**Figure 3B** illustrates one embodiment of a process for performing instrumentation of higher-order script;

**Figure 4** illustrates one embodiment of CoreScript syntax;

**Figure 5** illustrates expression and action evaluation in one embodiment of CoreScript;

**Figure 6** illustrates world execution in one embodiment of CoreScript;

**Figure 7** illustrates helper functions of Core Script semantics in one embodiment of CoreScript;

**Figure 8** illustrates policy satisfaction and action editing for use with one embodiment of CoreScript;

**Figure 9** illustrates one embodiment of edit automata;

**Figure 10** illustrates an example of automaton for a pop-up policy;

**Figure 11** illustrates an example of automaton for a cookie policy;

**Figure 12** illustrates one embodiment of syntax-directed rewriting;

**Figure 13** illustrates world execution in one embodiment of CoreScript extended with the policy module;

**Figure 14** illustrates an example implementation architecture; and

**Figure 15** is a block diagram of an example of a computer system.

## DETAILED DESCRIPTION OF THE PRESENT INVENTION

A method and apparatus for using program instrumentation to constrain behavior of embedded script in documents is described. In one embodiment, the documents comprise HTML documents. Embodiments of the present invention are different from existing program instrumentation in several aspects, including, but not limited to the handling of the specific execution model of JavaScript, the self-modifying capability of embedded script, and some pragmatic policy issues.

In one embodiment, inserted security checks and dialogue warnings using program instrumentation are used to identify and reveal to users potentially malicious behaviors. The extra computation overhead is usually acceptable, because JavaScript programs are typically very small in size, and performance is not a major concern of most web pages.

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs,

4

magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

### Overview of JavaScript Execution Model

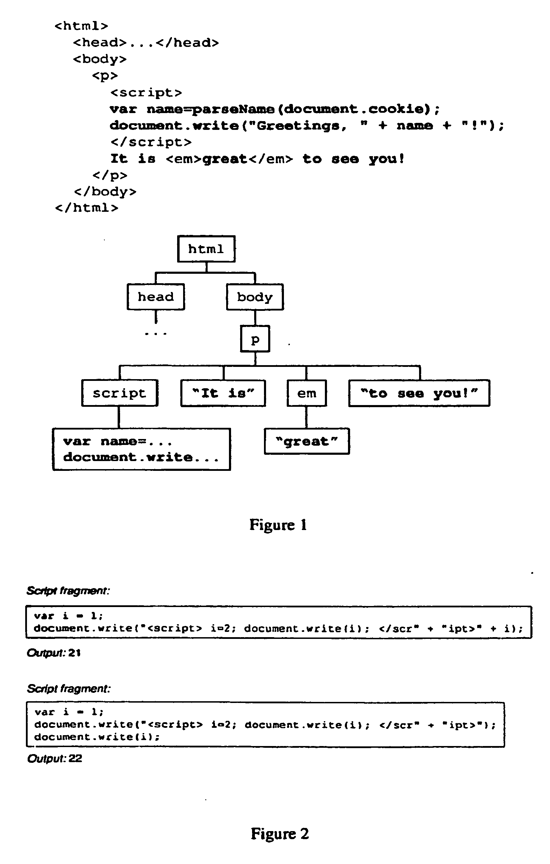

The execution model of JavaScript is quite different from those of other programming languages. A typical programming language takes input and produces output, possibly with some side effects produced during the execution. In the case of JavaScript, the program itself is embedded inside the "output" being computed. Figure 1 shows an example of a piece of script embedded in an HTML document. This script uses a function parseName (definition not shown) to obtain a user name from the cookie (document.cookie), and then calls a DOM API document.write to update the script node with some text.

Techniques described herein reflect this execution model. In one embodiment, script is handled as embedded in some tree-structured documents corresponding to HTML documents. In the operational semantics, script pieces are interpreted and replaced with the produced document pieces. The interpretation stops when no active script is present in the entire document. In essence, this execution model is a particular embodiment of self-modifying code.

### Overview of Program Instrumentation

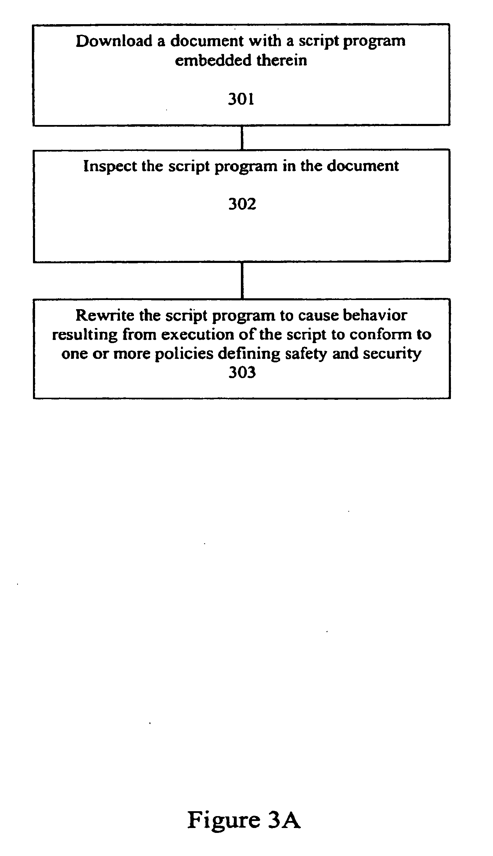

Figure 3A is a flow diagram of one embodiment of a process for instrumenting script programs embedded in documents. The process is performed by processing logic that may comprise hardware (e.g., circuitry, dedicated logic), software (such as is run on a general purpose computer system or dedicated machine), or a combination of both.

Referring to Figure 3A, the process begins by processing logic downloading a document with a script program embedded therein (processing block 301). In one embodiment, downloading the document is performed by a browser in a client. In one embodiment, the document is an HTML document. In one embodiment, the script program is JavaScript. In another embodiment, the script program is an ECMAscript-based program. In one embodiment, the script program comprises self-modifying code. The self-modifying code may comprise dynamically-generated JavaScript.

After downloading the document, processing logic inspects the script program in the document (processing block 302).

Based on the results of the inspection, processing logic rewrites the script program to cause behavior resulting from execution of the script to conform to one or more policies defining safety and security (processing block 303). In one embodiment, rewriting the script program comprises performing syntax-directed rewriting on demand.

In one embodiment, rewriting the script program comprises inserting a run-time check into the script program. In one embodiment, the run-time check comprises a security check. In another embodiment, the run-time check comprises a user warning. In one embodiment, the run-time check comprises code, which when executed at run-time, causes a call to an instrumentation process to instrument the script program in the document in response to performing an evaluation operation of the document.

In one embodiment, rewriting the script program comprises adding code to redirect an action through a policy module during run-time execution. In one embodiment, the process optionally includes the policy module performing a replacement action for the action at run-time where code has been added to redirect an action through the policy module.

In one embodiment, rewriting the script program comprises parsing the document into abstract syntax trees, performing rewriting on the abstract syntax trees, and generating instrumented script code and an instrumented document from the abstract syntax trees.

In one embodiment, the one or more policies are dynamically modifiable. In one embodiment, the one or more policies are expressed as edit automata. In one embodiment, at least one policy transfers a first action sequence in script program to a second action sequence different than the first action sequence. In one embodiment, the policies include a policy that combines multiple policies into one.

In one embodiment, the process further comprises maintaining states relevant to an edit automaton of the policy, including a current state and a complete transition function and calling a check function on an action and, in response thereto, advancing the state of the automaton and provides a replacement action for the action.

Higher-order Script

In the document pieces produced by JavaScript code at "run-time", there could be further JavaScript code embedded therein. This gives rise to a form of self-modifying code which is referred to herein as *higher-order script* (as in script that generates other script). For example, the above DOM API document, write allows not only plain-text arguments, but also arbitrary HTML-document arguments that possibly contain script nodes. These "run-time"-generated script nodes, when interpreted, may in turn produce more "run-time"-generated script nodes. In fact, infinite rounds of script generation could be programmed.

The behavior of an HTML document with higher-order script is sometimes difficult to understand. For instance, the two pieces of code fragment in Figure 2 appear to be similar, but produce different results. In this example, there is implicit conversion from integers to strings, + is string concatenation, and the closing tag </script> of the embedded script is intentionally separated so that the parser will not misunderstand it as for closing the outer script fragment. The evaluation and execution order of higher-order script is not clearly specified in the language specification. It is therefore useful to have a rigorous account as provided in the operational semantics described herein.

More importantly, higher-order script can be exploited to circumvent existing program instrumentation, because the instrumentation process cannot effectively identify all relevant operations before the execution of the code-some operations may be embedded in string arguments which are not apparent until at "run-time", including computation results, user input, and documents loaded from URLs. In addition, there are many ways to obfuscate such embedded script against analyses and filters, e.g., by a special encoding of some tag characters.

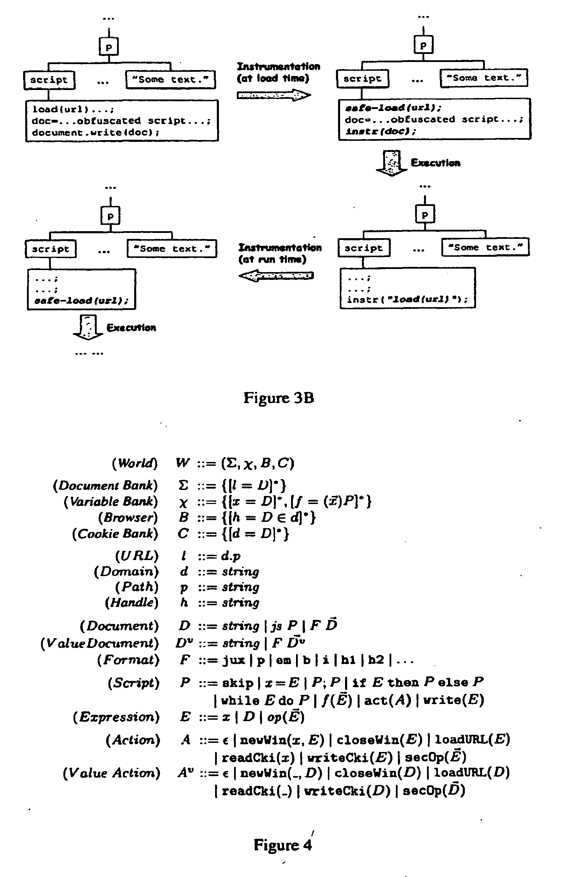

In one embodiment, the rewritten script program is part of an instrumented version of the document, and the instrumented version of the document includes hidden script, which is rewritten when the hidden script is generated during run-time. In one embodiment, the instrumentation of higher-order script is handled through an extra level of indirection, as demonstrated in Figure 3B. During the instrumentation, explicit security events such as load(url) are directly rewritten with code that performs pertinent security checks and user warnings (abstracted by safe-load(url)). However, further events may be hidden in the generated script doc. Without inspecting the content of doc, which is a hardship statically, the doc is fed verbatim to some special code instr. The special code, when executed at "run-time", calls back to the instrumentation process to perform the necessary inspection on the evaluation result of doc.

Such a treatment essentially delays some of the instrumentation tasks until "run-time", making it happen on demand. Note the code and other components of the instrumentation can be implemented in alternative embodiments either by changing the JavaScript interpreter in the browser or by using carefully written (but regular) JavaScript code which cannot be circumvented or misused.

In the case of JavaScript programs, it is sometimes difficult to exactly characterize violations. For instance, suppose a web page tries to load a document from a different domain. This may be either an expected redirection or a symptom of XSS attacks. In such a situation, it is usually desirable to present pertinent information to the user for their discretion.

In one embodiment, script is modified to prompt the user about suspicious behaviors, as opposed to stopping the execution right away. When appropriate (e.g., for out-of- boundary windows), the semantics of the code are changed (e.g., by "wrapping" the position arguments). In one embodiment, edit automata are used (which are more expressive than security automata) to represent such policies, and an instrumentation method described herein is designed to enforce policies in the form of edit automata.

Due to the wide use of JavaScript, it is difficult to provide a fixed set of policies for all situations. Customized policies are much desirable-there should be no change to the rewriting mechanisms when accommodating a new policy. In one embodiment, the same kind of rewriting regardless of the specifics of the policies is performed. In one embodiment, the rewriting produces code that refers to the policy through a fixed policy interface.

Furthermore, JavaScript and browser security is a mixture of many loosely coupled questions. Therefore, a useful policy is typically a combination of multiple component policies.

In one embodiment, similar to the case of the special code for handling higher-order script, the implementation of policy management is performed by either changing the JavaScript interpreter or by using regular JavaScript code. In the latter case, special care may be given to ensure that the implementation cannot be misused or circumvented.

CoreScript

In one embodiment, an abstract language CoreScript is used to constrain the behavior of embedded script programs in documents. CoreScript is a model of abstract version of JavaScript. One embodiment of an implementation of CoreScript is given below.

More specifically, CoreScript provides a way to describe the details of the instrumentation method below. In particular, operational semantics are given to CoreScript, focusing on higher-order script and its embedding in documents. To avoid obscuring the invention, objects are omitted from this model, because they are orthogonal. Note that adding objects present no new difficulties for instrumentation.

One embodiment of the syntax of CoreScript is shown in Figure 4. Referring to Figure 4, the symbols [ ] are used as parentheses of the meta language, rather than as part of the CoreScript syntax.

In one embodiment, the syntax is shown as follows. A complete "world" $W$ is a 4-tuple $(\Sigma, \chi, B, C)$.

The first element $\Sigma$, a document bank, is a mapping from URLs $l$ to documents $D$. In one embodiment, the document bank corresponds to the Internet. The second element $\chi$, a variable bank, maps global variables $x$ to documents $D$, and functions $f$ to script programs $P$ with formal parameters $\vec{x}$. The third element $B$, a browser, consists of possibly multiple windows, and each window has a handle $h$ for ease of referencing, a document $D$ as the content, and a domain name $d$ marking the origin of the document. The fourth element $C$, a cookie bank, maps domain names to cookies in the form of documents (each domain has its own cookie). In one embodiment, strings are used to model domain names $d$, paths $p$, and handles $h$. A URL $l$ is a pair of a domain name $d$ and a path $p$. An implicit conversion between URLs and strings is assumed (which is well-known in the art and done implicitly so as not to obscure the present invention).

In one embodiment, documents $D$ correspond to HTML documents. In JavaScript, all kinds of documents are embedded as strings using HTML tags such as <script> and <em>. That is, documents are treated uniformly as strings by program constructs, but are parsed differently than plain strings when interpreted. Documents in CoreScript reflect this, except that different kinds of documents are made syntactically different, rendering the parsing implicit. In one embodiment, a document is in either one of three syntactic forms: a plain string (*string*), a piece of script (*js P*), or a formatted document made up of a vector of sub-documents ($F \vec{D}$). Value documents $D^v$ are documents that contain no script. A few common HTML format tags in the syntax are listed as $F$, and a new tag jux is introduced to represent the juxtaposition of multiple documents (this simplifies the presentation of the semantics).

In one embodiment, the script programs $P$ are mostly made up of common control constructs, including no-op, assignment, sequencing, conditional, while-loop, and function call. In addition, in one embodiment, actions act($A$) are security-relevant operations that are to be identified and rewritten by the instrumentation process described herein. Furthermore, higher-order script is supported using write($E$), where $E$ evaluates at "run-time" to a document that may contain additional script.

Expressions $E$ include variables $x$, documents $D$, and other operations op($\vec{E}$). In one embodiment, the abstract *op* construct is used to cover common operations which are free of side-effects, such as string concatenation and comparison. In one embodiment, booleans are not explicitly modeled and instead they are simulated with special documents (strings) false and true.

A few actions $A$ are modeled explicitly for demonstration purposes. The action newWin($x,E$) creates a new window with $E$ as the content document; a fresh handle is assigned to the new window and stored in $x$. The action closewin($E$) closes the window which has handle $E$. The action loadURL($E$) directs the current window to load a new document from the URL $E$. The action readCki($x$) reads the cookie of the current domain into $x$. The action writeCki($E$) writes $E$ into the cookie of the current domain. All other potential actions may be abstracted as a generic secOp($\vec{E}$). Value actions $A^v$ are actions with document arguments only. Some arguments to actions are variables for storing results such as window handles or cookie contents. Such arguments are replaced with the notation "_" in value actions, because they do not affect the instrumentation.

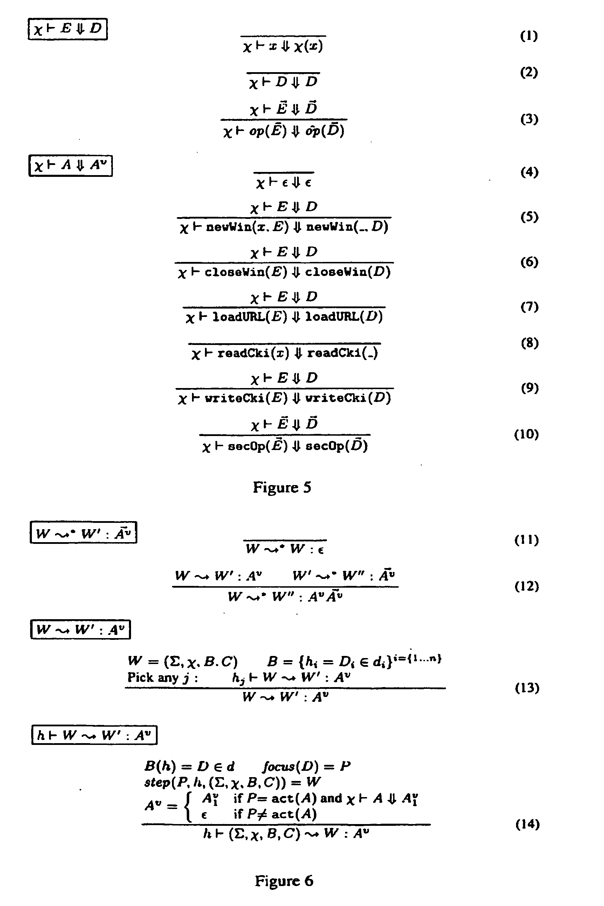

Figure 5 illustrates one embodiment of the semantics of expressions in a big-step style. At "run-time", expressions evaluate to documents, but not necessarily "value documents." Referring to Figure 5, there are a number of rules shown. As Rule (2) shows, $D$ is not inspected for embedded script during expression evaluation. In Rule (3), $\hat{op}$ is used to refer to the corresponding meta-level computation of *op*.

Actions are evaluated to value actions as shown in Figure 5. In particular, Rule (9) indicates that a cookie may be written with any document $D$, including a document with script embedded. Therefore, a program may store embedded script in a cookie for later use. The instrumentation given below will be sound under this behavior.

Figure 6 illustrates one embodiment of the execution of a world in a small-step style. This is more intuitive when considering the security actions performed along with the execution, as well as their instrumentation.

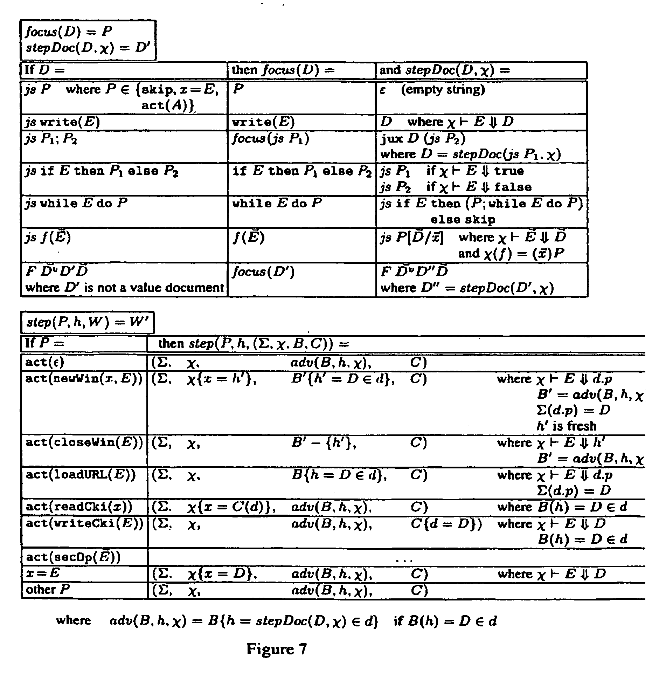

Referring to Figure 6, rules (11) and (12) define a multi-step relation that describes how a world evolves during execution. It is defined as the reflexive and transitive closure of a single step relation. The single step relation, defined by Rule (13), describes how a world evolves in a single step. It is non-deterministic, reflecting that any window could advance its content document at any time. Finally, Rule (14) uniformly advances the document in the window of handle $h$, using some macros defined in Figure 7.

The macro *focus* identifies the focus of the execution. It traverses a document and locates the left-most script component. The macro *stepDoc* computes an appropriate document for the next step, assuming that the focus of the argument document will be executed. The *focus* and *stepDoc* cases on value documents (e.g., strings) are undefined. This indicates that nothing in value documents can be executed. If nothing can be executed in the entire document, then the execution terminates.

The macro *step* computes the step transition on worlds. Suppose the world *W* is making a step transition by advancing the document in window *h*, and suppose the focus computation of the document in window *h* is *P*. The result world after the step transition would be *step*(*P, h, W*). When defining *step,* the helper *adv*(*B, h,* χ) makes use of *stepDoc* to advance the document in window *h*.

Note that the semantics dictates the evaluation order for higher-order script, thus the two examples in Figure 2 are naturally explained. Take write($op(\vec{E})$); *P* as an example. CoreScript evaluates all $E_i$ before executing the script embedded in any of them, explaining the behavior of the first script fragment in Figure 2. *P* is executed after the script generated by write($op(\vec{E})$) has finished execution, explaining the second.

## Security Policies

Various security policies can be designed to counter browser-based attacks. For instance, these attacks may include the opening of an unlimited number of windows (e.g., pop-ups) and send sensitive cookie information to untrusted parties (e.g., XSS).

In one embodiment, policy management and code rewriting are performed by two separate modules. In this way, policies can be designed without knowledge of the rewriting process. A policy designer ensures that the policies adequately reflect the desired protections. On the enforcement side, the rewriting process accesses the policy through a policy interface. The same kind of rewriting is used for all policies.

One embodiment of a policy framework and a policy interface that embodiments of the rewriting method use is given below.

Policy Representation

In one embodiment, policies Π are expressed as edit automata. In one embodiment, an edit automaton is a triple (*Q, $q_0$,* δ), where *Q* is a possibly countably infinite set of states, $q_0 \in Q$ is the initial state (or current state), and δ is the complete transition function that has the form δ : *Q*•*A* → *Q*•*A* (the symbol *A* is reused here to denote the set of actions in CoreScript). The transition function δ may specify insertion, replacement, and suppression of actions, where suppression is handled by discarding the input action and producing an output action of ε. In one embodiment, δ (*q,* ε) = (*q,* ε) so that policies are deterministic.

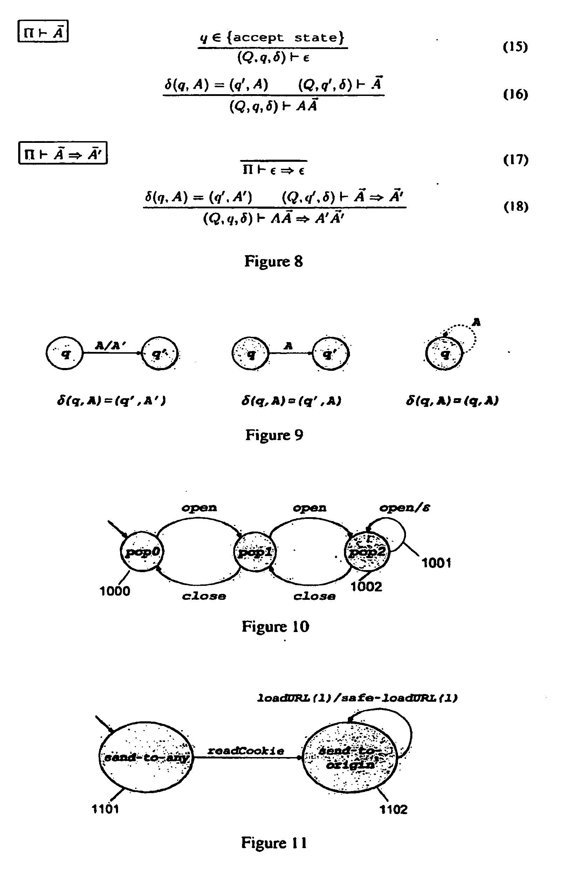

Figure 8 defines the meaning of a policy for one embodiment in terms of policy satisfaction (whether an action sequence is allowed) and action editing (how to rewrite an action sequence). Referring to Figure 8, rules (15) and (16) define the satisfaction of a policy Π on an action sequence $\vec{A}$. Intuitively, $\Pi \vdash \vec{A}$ if and only if when feeding $\vec{A}$ into the automaton of Π, the automaton performs no modification to the actions, and stops at the end of the action sequence in a state that signals acceptance. Below, it is assumed that every state is an "accept" state for simplicity, although it is trivial to relax this assumption.

Rules (17) and (18) define how a policy Π transforms an action sequence $\vec{A}$ into another action sequence $\vec{A'}$ Intuitively, $\Pi \vdash \vec{A} \Rightarrow \vec{A'}$ if and only if when feeding $\vec{A}$ into the automaton of Π, the automaton produces $\vec{A'}$.

Because not all edit automata represent sensible policies, it is useful to define the consistency of policies. For instance, an edit automaton may convert action $A_1$ into $A_2$ and $A_2$ into $A_1$. It is unclear how an instrumentation mechanism should act under this policy, because even the recommended replacement action does not satisfy the policy. Thus, consistency is used to control edit automata.

**Definition 1 (Policy Consistency)** A policy Π = (*Q, $q_0$,* δ) is consistent if and only if δ (*q, A*) = (*q' A'*) implies δ (*q, A'*) = (*q', A'*) for any *q, q', A* and *A'*.

**Theorem 1 (Sound Advice)** Suppose Π is consistent. If $\Pi \vdash \vec{A} \Rightarrow \vec{A'}$, then $\Pi \vdash \vec{A'}$.

An inconsistent policy reflects an error in policy design. Syntactically, in one embodiment, an inconsistent policy is converted into a consistent one: when the policy suggests a replacement action *A'* for an input action *A* under state *q*, the policy is updated to also accept action *A'* under state *q*. More accurately, if δ (*q, A*) = (*q', A'*), then consistency may be achieved by ensuring that δ (*q', A'*) = (*q', A'*). However, semantically, the policy designer decides whether the updated policy is the intended one, especially in the cases of conflicting updates. For instance, in the above example, the inconsistent policy may have already defined δ (*q, A'*) = (*q", A"*).

In one embodiment, consistent policies are used to guide the instrumentation described herein, and policy consistency serves as an assumption of the correctness theorems discussed herein. Internally, a policy module maintains all states relevant to the edit automaton of the policy, including a current state and a complete transition function. Externally, the same policy module exposes the following interface to the rewriting process:

- Action review: check(*A*).

This action review interface takes an input action as argument, advances the internal state of the automaton, and performs a replacement action according to the transition function.

The policy framework described above is effective in identifying realistic JavaScript attacks and providing useful feedback to the user. Examples are given below that demonstrate the identification of script attacks and the providing of useful feedback.

For ease of reading, Figure 9 presents edit automata as diagrams. To build a diagram from an edit automaton, a node is first created for every element of the state set. The node representing the starting state is marked with a special edge into the node. If the state transition function maps (*q, A*) into (*q', A'*), an edge from the node of *q* to the node of *q'* is added, and the edge is marked with *A/A'*. For conciseness, *A* is used to serve as a shorthand of *A/A*. If the state transition is trivial (performing no change to an input pair of state and action), that edge may be omitted. Conversely, if a diagram does not explicitly specify an edge from state *q* with action *A*, there is an implicit edge with *A/A* from the node of *q* to itself.

Figure 10 presents a policy for restricting the number of pop-up windows. The start state is *pop*0 1000. State transition on (*pop*0, *close*) is trivial (implicit). State transitions from the states with actions other than *open* and *close* are also trivial (implicit). This policy essentially ignores new window opening actions when there are already two pop-ups, which is shown with the arrow 1001 that returns to state 1002.

Figure 11 presents a policy for restricting the (potential) transmission of cookie information. The start state 1101 is *send-to-any.* In state *send-to-origin* 1102, network requests are handled with a safe version of the loading action called *safe-loadURL.* In this policy, state transitions on (*send-to-any, loadURL(l)*), (*send-to-any. safe-loadURL*), (*send-to-origin, readCookie*), (*send-to-origin, safe-loadURL*) are trivial (implicit). State transitions from the states with actions other than reading, loading, and safe loading are also trivial (implicit). Essentially, this policy puts no restriction on loading before the cookie is read, but permits only safe loading afterwards.

The implementation of the safe loading *safe-loadURL* performs necessary checks on the domain of the URL and asks the user whether to proceed with the loading if the domain of the URL does not match the origin of the document. If desirable, in one embodiment, a replacement action such as *safe-loadURL* obtains information from the current state of the automaton and performs specialized security checks and user prompts. Its implementation is part of the policy module and, therefore, does not affect the rewriting process. It suffices to understand the implementation of safe actions as trusted and cannot be circumvented-safe actions are implemented correctly, and malicious script cannot overwrite the implementation.

In practice, there are many different kinds of attacks. In one embodiment, there are many different policies, each protecting against one kind of attack. In one embodiment, multiple (without loss of generality, two) policies are combined into one, which in turn guides the rewriting process.

For a policy combination ($\Pi_1 \oplus \Pi_2 = \Pi$) to be meaningful, it is sensible to require the following two conditions.

1. Safe combination: Suppose $\Pi_1$ and $\Pi_2$ are consistent. For all $\overline{A}$, $\Pi_1 \oplus \Pi_2 \vdash \overline{A}$ if and only if $\Pi_1 \vdash \overline{A}$ and $\Pi_2 \vdash \overline{A}$.

2. Consistent combination: If $\Pi_1$ and $\Pi_2$ are consistent, then $\Pi_1 \oplus \Pi_2$ is consistent.

A definition of policy combination that respects these requirements is as follows:

Given two edit automata $\Pi_1 = (\{p_i \mid i = 0 \ldots n\}, p_0, \delta_1)$ and $\Pi_2 (\{qj \mid j = 0 \ldots m\}, q0, \delta_2)$, then:

$$\Pi_1 \oplus \Pi_2 = (\{p_i q_j \mid i = 0 \ldots n, j = 0 \ldots m\}, p_0 q_0, \delta)$$

*where*

$$\delta(p_i q_j, A) = \begin{cases} (p_l q_k, A') & \text{if } \delta_1(p_i, A) = (p_l, A') \text{ and } \delta_2(q_j, A') = (q_k, A') \\ (p_l q_k, A') & \text{else if } \delta_2(q_j, A) = (q_k, A') \text{ and } \delta_1(p_i, A') = (p_l, A') \\ (p_i q_j, \in) & \text{otherwise} \end{cases}$$

Intuitively, in one embodiment, the combined policy simulates both component policies at the same time. When the first policy suggests an action that is agreed to by the second policy, the combined policy takes that action. If not, the first policy tries to see if the suggestion of the second policy is agreed to by the first policy. In the worse case that neither of the above two holds, the combined policy suppresses the action. There is a combinatorial growth in the number of states after the combination. In one embodiment, this does not pose a problem for an implementation, because a policy module maintains separate state variables and transition functions for the component policies, yielding a linear growth in the policy representation.

It is not difficult to check that this definition of combination satisfies the above safety and consistency requirements. Nonetheless, note that there exist other sensible definitions of combination that also satisfy the same requirements. For example, the above definition "prefers" the first policy over the second. A similar definition that prefers the second is also sensible. Furthermore, a more sophisticated combination may attempt to resolve conflicts by recursively feeding suggested actions into the automata, whereas the above simply gives up after the first try. Note that, in one embodiment, the requirement of "safe combination" only talks about acceptable action sequences, not about replacement actions.

**CoreScript Instrumentation**

Given the policy module and its interface described above, the instrumentation of CoreScript becomes a syntax-directed rewriting process.

The task of the rewriting process is to traverse the document tree and redirect all actions through the policy module. Whenever an action act($A$) is identified, the action is redirected to the action interface check($A$), trusting the policy module to perform an appropriate replacement action at "run-time". Upon receiving a higher-order script write($E$), the document is fed argument $E$ verbatim to a special interface instr($E$), whose implementation calls back to the rewriting process at "run-time" after $E$ is evaluated.

In one embodiment, the above two interfaces are organized as two new CoreScript instructions for the rewriting process to use. In particular, the syntax of CoreScript is extended as follows.

$$(Script)\ P ::= \ldots \mid \mathtt{instr}(E) \mid \mathtt{check}(A)$$

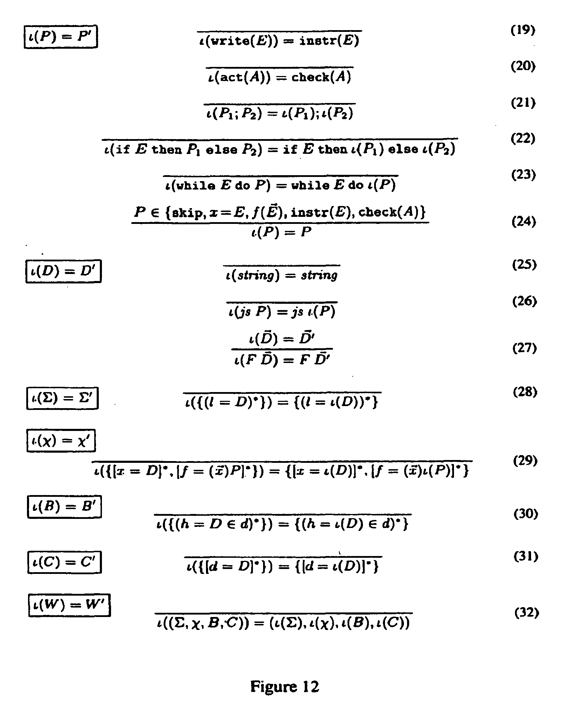

Figure 12 illustrates the details of the rewriting process. In this process, no knowledge is required on the meaning or the implementation of the two new instructions. The non-trivial tasks are performed by Rules (19) and (20), where the new instructions are used to replace "run-time" code generation and actions. All other rules propagate the rewriting results. The rewriting cases for the two new instructions are given in Rule (24), which allows the rewriting to work on code that calls the two interfaces. The rewriting on world $W$ and its four components are also defined. In one implementation, some components (e.g., the document bank $\Sigma$) will be instrumented on demand (e.g., when loaded).

The semantics of the two new instructions are given so as to reason about the correctness of the instrumentation. For instr($E$), the purpose is to mark script generation and delay the instrumentation until "run-time". Therefore, its operational semantics evaluate the argument expression and feed it through rewriting. The following definitions capture that.

$$focus(js\ \mathtt{instr}\ (E)) = \mathtt{instr}\ (E)$$

$$stepDoc(js\ \mathtt{instr}\,(E), \chi) = \iota(D)\ where\ \chi \vdash E \Downarrow D \tag{33}$$

$$step\,(\mathtt{instr}\,(E), h\,(\Sigma, \chi,\ B,\ C)) = (\Sigma, \chi,\ adv(B,\ h,\ \chi), C)$$

Recall that *adv* is defined in Figure 7. The operational semantics rules for other language constructs remain the same under the addition of instr. The *focus* and *step* function cases defined above fit in well with Rule (14), which makes a step on a document given a specific window handle.

Inspecting Rule (33), the rewriting process $\tau$ is called at run time after evaluating $E$ to $D$. In one embodiment, execution of $\tau$ always terminates, producing an instrumented document. In this instrumented document, there is potentially further hidden script marked by further instr. Such hidden script will be rewritten later when it is generated.

The semantics of check($A$) are defined in a similar fashion using the following definitions.

$$focus(js\ \mathtt{check}\,(A)) = \mathtt{check}\,(A)$$

$$stepDoc(js\ \mathtt{check}\,(A), \chi) = \varepsilon \tag{34}$$

$$step\,(\mathtt{check}\,(A), h\,(\Sigma, \chi,\ B,\ C)) = undefined$$

The *focus* case for check(*A*) is trivially check(*A*) itself. The execution of check(*A*) consumes check(*A*) entirely and leaves no further document piece for the next step, hence being the *stepDoc* case. The *step* case is undefined, because we will not refer to this case in the updated operational semantics.

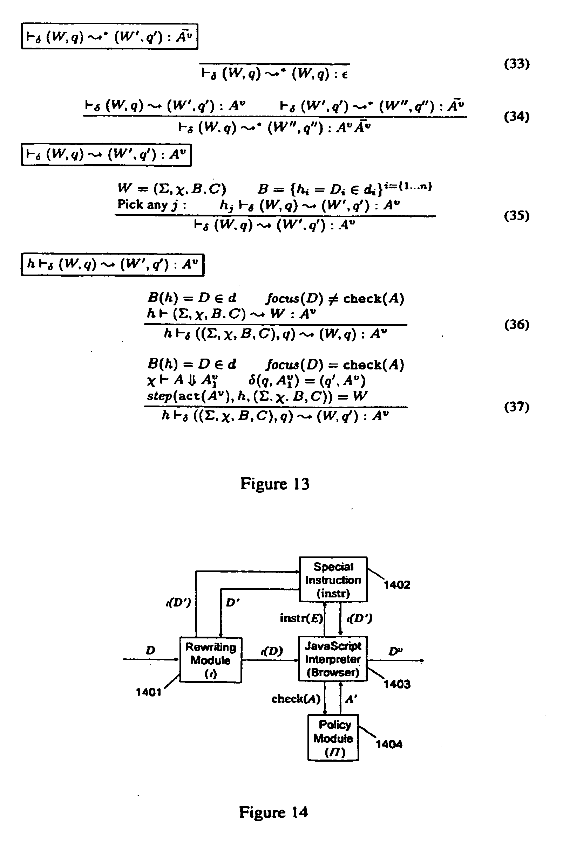

With the addition of check, the program execution is connected to the policy module. Therefore, in the updated operational semantics, the internal state of the policy module (the state of the edit automaton) is taken into account. In one embodiment, the reduction relations of CoreScript in Figure 13 are extended, where the new formations of the reduction relations explicitly specify the automaton transition function ($\delta$) and the automaton states ($q$ and $q'$). Similar to the previous semantics, the multi-step relation defined by Rules (35) and (36) is a reflexive and transitive closure of a non-deterministic step relation defined by Rule (37). This non-deterministic step relation is defined with help of a deterministic step relation, which is referred to herein as "document advance."

Document advance is defined by Rules (38) and (39). When the focus of the document is not a call to check, the old document advance relation (defined in Rule (14)) is used, and the automaton state remains unchanged. When the focus is a call to check, the automaton state is updated and the replacement action is produced according to the transition function, and the world components are updated using the step case of act($A^v$) because the replacement action $A^v$ is performed instead of the original action $A$.

Thus, a policy instance is executed alongside with the program execution-the current state of the policy instance is updated in correspondence with the actions of the program.

Concretizing CoreScript

In one embodiment, CoreScript is modeled as a core language for client-side scripting. Its distinguishing features include the embedding of script in documents, the generation of new script at "run-time", and the security-relevant actions. The ideas described above are also applicable to other browser-based scripting languages.

First, CoreScript supports the embedding of code in a document tree using j s nodes. Such a treatment is adapted from the use of <script> tags in JavaScript (Figure 1 provided an example). Beyond the <script> tags, there are many other ways for embedding script in an HTML document. Some common places where script could occur include images (e.g., <IMG SRC=...>), frames (e.g., <IFRAME SRC=...>), tables (e.g., <TABLE BACKGROUND=...>), XML (e.g., <XML SRC=...>, and body background (e.g., <BODY BACKGROUND=...>. Furthermore, script can also be embedded in a large number of event handlers (e.g., onActivate(), onClick(), onLoad(), onUnload(), ...). In one embodiment, such embedded script is also identified and rewritten.

Second, CoreScript makes use of write(*E*) to generate script at "run-time". This is a unified view on several related functions, including eval in the JavaScript core language and window.execScript, document, write, document.writeln in the DOM. These functions all take string arguments. The function eval evaluates a string as a JavaScript statement or expression and returns the result. The function window.execScript executes one or more script statements but returns no values. CoreScript's treatment on higher-order script is expressive enough for these two.

However, the functions document.write and document.writeln are more challenging. These two functions send strings as document fragments to be displayed in their windows, where the document fragments could have script embedded. These document fragments do not have to be complete document tree nodes, and instead, they can be pieced together with other strings to form a complete node, as demonstrated in the following examples.

```
<script>
document.write("<scr");
document.write("ipt> malic");
var i = 1;
document.write("ious code; </sc");
document.write("ript>"):
</script>
<script>
document.write("<scr");</script>ipt>
malicious code
 </script>
```

Each of the above write functions appears to produce harmless text to a naïve filter. To avoid such loopholes when applying CoreScript instrumentation, in one embodiment, generated document fragments are pieced together before fed into the rewriting process of the next stage. This is done with care to avoid changing the semantics of the code (recall Figure 2). Observing that the expressiveness of producing new script as broken-up fragments does not seem to be useful in well-intended programs, a better solution might be to simply disrupt the generation of ungrammatical script pieces.

In one embodiment, CoreScript does not provide a way to modify the content of a document in arbitrary ways, because a write(*E*) node generates a new node to be positioned at the exact same location in the document tree. The DOM provides other ways for modifying a document. For instance, a document could be modified through the innerHTML, innerText, outerHTML, outerText, and nodeValue properties of any element. In one embodiment, these are not covered in the CoreScript model. Nonetheless, an extension is conceivable, where the mechanism for "run-time" script generation specifies which node in the document tree is to be updated. The instrumentation method remains the same, because it does not matter where the generated script is located, as long as it is rewritten appropriately to go through the policy interface.

Lastly, in one embodiment, CoreScript includes some simple actions for demonstration purposes. A realization would accommodate many other actions pertinent to attacks and protections. Some relevant DOM APIs include those for manipulating cookies, windows, network usage, clipboard, and user interface elements. In addition, it is useful to introduce implicit actions for some event handlers. For instance, the "undead window" attack below could be prevented by disallowing window opening inside an onUnload event.

```
<html>
<head>
<script type="text/javascript">
 function respawn() {window.open("URL/undead.html")}
</script>
</head>
<body onunload="respawn()">Content of undead.html</body>
</html>
```

**An Example Implementation Architecture**

Figure 14 illustrates an example of an implementation architecture. Each of the modules may comprise hardware (circuitry, dedicated logic, etc.), software (such as is run on a general purpose computer system or a dedicated machine), or a combination of both.

Referring to Figure 14, the implementation may extend a browser with three small modules-module 1401 for the syntactic code rewriting ($\tau$), module 1402 for interpreting the special instruction (instr), and module 1404 for implementing the security policy ($\Pi$). In one embodiment, a browser 1403 does not interpret a document *D* directly. Instead, browser 1403 interprets a rewritten version $\tau$ (*D*) produced by the rewriting module. Upon a special instruction instr(*E*), the implementation of instr evaluates the expression *E* and sends the result document *D*' through rewriting module 1401. The result of the rewriting $\tau$ (*D*') is directed back to browser 1403 for further interpretation. Upon a call to the policy interface check(*A*), policy module 1404 advances the state of the automaton and provides a replacement action *A*'.

In one embodiment, rewriting module 1401 is implemented in Java, with help of ANTLR for parsing JavaScript code. For more information on ANTLR, see T. Parr *et al.* ANTLR reference manual (available at http://www.antlr.org/, Jan. 2005). This module parses HTML documents into abstract syntax trees (ASTs), performs rewriting on the ASTs, and generates instrumented JavaScript code and HTML documents from the ASTs. In one embodiment, browser 1403 is set up to use rewriting module 1401 as a proxy for all HTTP requests.

In one embodiment, the special instruction can be implemented by modifying the JavaScript interpreter in browser 1403 according to the operational semantics given by Rule (33) given above. After the interpreter parses a document piece out of the string argument (abstracted by the evaluation relation in Rule (33)), rewriting module 1401 is called to perform rewriting of script. The interpretation resumes afterwards with the rewritten document piece.

Although the above is straightforward, it requires changing the implementation of the browser. Alternatively, one may opt for an implementation within the regular JavaScript language itself, where instr is implemented as a JavaScript function. The call-by-value nature of JavaScript functions evaluates the argument expression before executing the function body, which naturally provides the expected semantics. For example, in one embodiment, an XMLHttpRequest object (A. van Kesteren and D. Jackson. The XMLHttpRequest object. W3C working draft, available at http://www.w3.org/TR/XMLHttpRequest/, 2006.) (popularly known as part of the Ajax approach) is used to call the Java program of the rewriting module from inside JavaScript code.

Although convenient, this approach is not as robust as that of modifying the JavaScript interpreter, because it is more vulnerable to malicious exploits. As discussed above, JavaScript provides some form of self-modifying code, e.g., through innerHTML. This presents a possibility for malicious script to overwrite the implementation of instr, if instr is implemented in JavaScript and interpreted together with incoming documents. Additional code inspection is needed to protect against such exploits, which makes the implementation dependent on some idiosyncrasies of the JavaScript language. Therefore, it may be more desirable to modify the interpreter when facing a different tradeoff.

Similar implementation choices apply to the policy module. For example, one can implement the policy module as an add-on to the browser with the expected policy interface. In one embodiment, the policy module is also implemented in regular JavaScript-check is implemented as a regular JavaScript function and calls to check are regular function calls with properly encoded arguments that reflect the actions being inspected. The body of the check function performs the replacement actions, which are typically the original actions with checked arguments and/or inserted user prompts. The above protection for instr against malicious exploits through self-modifying code also applies here.

In one embodiment, policies are enforced per "document cluster." A browser may simultaneously hold multiple windows, and some of these windows communicate with each other (e.g., a window and its pop-up, if the pop-up holds a document from the same origin); these are referred to herein as being in the same cluster. In one embodiment, each cluster is given its own policy instance in the form of a JavaScript object, and all windows in the same cluster are given a reference to the cluster's policy instance, which is properly set up when windows are created or documents are loaded. This does not affect the essence of the instrumentation. Nonetheless, the per-cluster enforcement is necessary for expressing practical policies. On the one hand, in one embodiment, documents from different clusters do not share the same policy instance, so that the behavior of one document would not affect what an unrelated document is allowed to do (e.g., two unrelated windows may each have their own quota of pop-ups). On the other hand, documents from the same cluster share the same policy instance to prevent malicious exploits (e.g., an attack may conduct relevant actions in separate documents in the same cluster).

## Correctness of the Method

For purposes herein, the correctness of the instrumentation is presented as two theorems-safety and transparency. Safety states that instrumented code will respect the policy. Transparency states that the instrumentation will not affect the behavior of code that already respects the policy. The intuition behind these correctness theorems is straightforward, since the instrumentation described herein feeds all actions through the policy module for suggestions. Safety holds because the suggested actions satisfy the policy due to policy consistency. Transparency holds because the suggested actions would be identical to the input actions if the input actions already satisfy the policy. In what follows, these two theorems are established with a sequence of lemmas.

First, a notion of orthodoxy is introduced.

**Definition 2 (Orthodoxy)** $W$ (or $\Sigma$, $\chi$, $B$, $C$, $D$, $P$) is orthodox if it has no occurrence of act($A$) or write($E$).

Note that, in one embodiment, the instrumentation described herein produces orthodox results, as in the following lemma.

**Lemma 1 (Instrumentation Orthodoxy)** $t(P)$, $t(D)$. $t(C)$, $t(B)$, $t(\chi)$, $t(\Sigma)$, and $t(W)$ are orthodox.

**Proof sketch:** By simultaneous induction on the structures of $P$ and $D$. By case analysis on the structures of $C$, $B$, $\chi$, $\Sigma$, and $W$.

The orthodoxy is preserved by the step relation as shown as follows.

**Lemma 2 (Orthodoxy Preservation)** If $W$ is orthodox and $\vdash_\delta (W, q) \to (W', q') : A^v$, then $W'$ is orthodox.

**Proof sketch:** By definition of the step relation ($\to$), with induction on the structure of documents. The case of executing write($E$) is not possible because $W$ is orthodox. In the case of executing instr($E$), the operational semantics produces an instrumented document to replace the focus node. Orthodoxy thus follows from Lemma 1. In all other cases, the operational semantics may obtain document pieces from other program components, which are orthodox by assumption.

The execution of an orthodox world respects the policy, as articulated below.

**Lemma 3 (Policy Satisfaction)** Suppose II = ($Q$, $q$, $\delta$) is consistent. If $W$ is orthodox and $\vdash_\delta (W, q) \to (W', q') : A^v$, then $\delta(q, A^v) = (q', A^v)$.

**Proof sketch:** By case analysis on the step relation ($\to$). In the case of executing check($A$), by inversion on Rule (39), $\delta(q, A_I^v) = (q', A^v)$. The expected result $\delta(q, A^v) = (q', A^v)$ follows directly from the definition of policy consistency. In all other cases, by inversion on Rule (38), $q = q'$. By further inversion on Rule (14), $A^v = \epsilon$ (the case of executing act($A$) is not possible because $W$ is orthodox). $\delta(q,\epsilon) = (q,\epsilon)$ because of the deterministic requirement on policies.

The safety theorem follows naturally from these lemmas.

**Theorem 2 (Safety)** Suppose II = ($Q$, $q$, $\delta$) is consistent. If $W$ is orthodox and $\vdash_{\delta} (W, q) \to^* (W', q') : \overline{A}^v$, then II $\vdash \overline{A}^v$.

**Proof sketch:** By structural induction on the multi-step relation ($\to^*$). The base case of zero step and empty output action is trivial. In the inductive case, there exists $W_1$, $q_1$ and $A_I^v$ such that $\vdash_\delta (W,q) \to (W_1,q_1) : A_I^v$, $\vdash_\delta (W_1, q_1) \to^* (W', q') :$, and $\vec{A}^{v'}$, and $\overline{A}^v = A_I^v \vec{A}^{v'}$. By Lemma 3, $\delta (q, A^v) = (q_1, A^v)$. ($Q$, $q_1$, $\delta$) is consistent by assumption and definition of policy consistency. $W_1$ is orthodox by Lemma 2. By induction hypothesis, ($Q$, $q_1$, $\delta$) $\vdash \overline{A}^{v'}$. By definition of policy satisfaction, II $\vdash \overline{A}^v$.

From the instrumentation's perspective, it is desirable to establish that $t(W)$ is safe given any $W$. This follows as a corollary of Theorem 2, because $t(W)$ is orthodox by Lemma 1.

To formulate the transparency theorem, the multi-step relation defined above is used before the instrumentation extension. This reflects the intuition that incoming script should be a sensible CoreScript (or JavaScript) program without knowledge about the policy module. A lock step lemma is introduced to relate the single-step execution of instrumented code with the single-step execution of the original code in the case where the original code satisfies the policy.

**Lemma 4 (Lock step) If $W \to W'$:** $A^v$ and $\delta(q, A^v) = (q', A^v)$, then $\vdash_\delta (t(W), q) \to (t(W'), q'):A^v$.

**Proof sketch:** By definition of the step relation ($\to$), with induction on the structure of documents. The focus of $t(W)$ refers to a tree node in correspondence with the focus of $W$.

In the case that writer ($E$) is the focus of $W$, instr($E$) will be the focus of $t(W)$. The operational semantics of write and instr perform a similar evaluation on the argument $E$, except that instr($E$) uses an instrumented variable environment and returns an instrumented result document. The output action $A^v$ is $\in$ in both cases. We can construct the deprivation $_\delta(t(W), q) \to (t(W'), q') : A^v$ by: (i) following Rule (37) and choosing the same handle $h$ as used for obtaining $W \to W'$: $A^v$; (ii) following Rule (38), which refers back to the old single-step relation $h \vdash t(W) \to t(W')$: $A^v$; then (iii) following the derivation of $h \vdash W \to W'$: $A^v$ used for obtaining $W \to W'$: $A^v$, with various components replaced with the instrumented version.

In the case that act($A$) is the focus of $W$, check($A$) will be the focus of $t(W)$. act and check both produce an empty string to replace the focus tree node. The operational semantics of act($A$) evaluate $A$ to $A^v$ (Rule (14)). The operational semantics of chec k(A) evaluate $A$ to $A^v$ and feed $A^v$ to the policy (Rule (39)). By assumption, $\delta(q, A^v = (q', A^v)$. Therefore, in one embodiment, act and check produce the same output action in this case. The operational semantics of check($A$) will further apply the macro *step* to act($A^v$) to update the world components. Therefore, further derivations of the two reductions follow the same structure.

In all other cases, $W$ and $t(W)$ are executing the same instructions. The derivation of the instrumented reduction follows that of the original reduction. The transparency theorem follows naturally from the lock step lemma.

**Theorem 3 (Transparency) If $W \to^* W'$:** $\vec{A^v}$ and $(Q, q, \delta) \vdash \vec{A^v}$, then $\vdash \delta(t(W), q) \to^*(t(W'), q') \vec{A^v}$.

**Proof sketch:** By structural induction on the multi-step relation ($\to^*$). The base case of zero step and empty output action is trivial. In the inductive case, there exists $W_1$ and $\vec{A_I^v}$ such that $W \to W_1$: $\vec{A_I^v}$, $W_1 \to^* W'$: $\vec{A^{v'}}$, and

$\vec{A^v} = \vec{A_I^v} \vec{A^{v'}}$. By assumption $(Q, q, \delta) \vdash \vec{A^v}$ and definition of policy satisfaction, there exists $q_1$ such that $\delta(q, \vec{A_I^v})$ $= (q_1, \vec{A_I^v})$ and $(Q, q_1, \delta) \vdash \vec{A^{v'}}$. By Lemma 4,

$$\vdash_\delta (t(W), q) \to (t(W'), q_1) : \vec{A_I^v}.$$

By induction hypothesis, $\vdash_\delta (t(W_1), q_1) \to^*(t(W'), q'): \vec{A^{v'}}$. By Rule (36), $\vdash_\delta (t(W). q) \to^*(t(W'). q'): \vec{A^v}$.

In the above transparency theorem, the original world $W$ does not refer to the instrumentation and policy interfaces, reflecting that incoming script is written in regular JavaScript. A variant of the transparency theorem can be formulated to allow incoming script that refers to the instrumentation and policy interfaces, as follows.

**Theorem 4 (Extended Transparency)** If $\vdash_\delta (W, q) \to^*(W', q'): \vec{A^v}$ and $(Q, q, \delta) \vdash \vec{A^v}$, then $\vdash_\delta (t(W), q) \to^*(t(W'), q'): \vec{A^v}$. This theorem allows W to be unorthodox-W may contain a mixture of write, act, instr and check. The proof of this theorem requires a similarly extended lockstep lemma. The proof extension is straightforward, because on the two new cases allowed by this theorem (instr and check), the rewriting is essentially an identity function.

## An Example of a Computer System

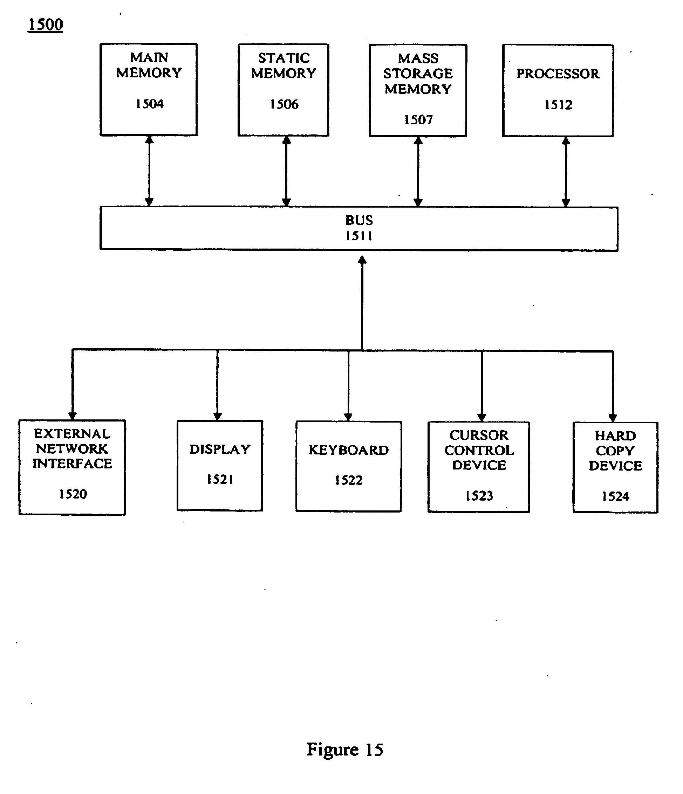

Figure 15 is a block diagram of an exemplary computer system that may perform one or more of the operations described herein. Referring to Figure 15, computer system 1500 may comprise an exemplary client or server computer system. Computer system 1500 comprises a communication mechanism or bus 1511 for communicating information, and a processor 1512 coupled with bus 1511 for processing information. Processor 1512 includes a microprocessor, but is not limited to a microprocessor, such as, for example, Pentium™, PowerPCT™, Alpha™, etc.

System 1500 further comprises a random access memory (RAM), or other dynamic storage device 1504 (referred to as main memory) coupled to bus 1511 for storing information and instructions to be executed by processor 1512. Main memory 1504 also may be used for storing temporary variables or other intermediate information during execution of instructions by processor 1512.

Computer system 1500 also comprises a read only memory (ROM) and/or other static storage device 1506 coupled to bus 1511 for storing static information and instructions for processor 1512, and a data storage device 1507, such as a magnetic disk or optical disk and its corresponding disk drive. Data storage device 1507 is coupled to bus 1511 for storing information and instructions.

Computer system 1500 may further be coupled to a display device 1521, such as a cathode ray tube (CRT) or liquid crystal display (LCD), coupled to bus 1511 for displaying information to a computer user. An alphanumeric input device 1522, including alphanumeric and other keys, may also be coupled to bus 1511 for communicating information and command selections to processor 1512. An additional user input device is cursor control 1523, such as a mouse, trackball, trackpad, stylus, or cursor direction keys, coupled to bus 1511 for communicating direction information and command selections to processor 1512, and for controlling cursor movement on display 1521.

Another device that may be coupled to bus 1511 is hard copy device 1524, which may be used for marking information on a medium such as paper, film, or similar types of media. Another device that may be coupled to bus 1511 is a wired/wireless communication capability 1525 to communication to a phone or handheld palm device.

Note that any or all of the components of system 1500 and associated hardware may be used in the present invention. However, it can be appreciated that other configurations of the computer system may include some or all of the devices.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

**Claims**

1. A method comprising:

   downloading a document with a script program embedded therein, wherein the script program comprises self-modifying code;
   inspecting the script program;
   rewriting, by a rewriting module (1401) using a syntax-directed rewriting process, the script program prior to run-time and at run-time, wherein rewriting the script program comprises:

   inserting a run-time check into the script program, the run-time check comprising code, which when executed, causes an expression corresponding to the document to be evaluated at run-time and causes the document to be sent through the rewriting module (1401), which instruments the script program in the document at run-time based on a result of evaluating the expression, and adding code to redirect an action through a policy module during run-time execution to cause behavior resulting from execution of the instrumented script program to conform to one or more policies defining safety and security, the one or more policies being expressed as edit automata.

2. The method defined in Claim 1 wherein the self-modifying code comprises dynamically-generated JavaScript.

3. The method defined in Claim 1 wherein rewriting the script program comprises performing the syntax-directed rewriting process on demand.

4. The method defined in Claim 1 wherein the run-time check comprises one or more of a group consisting of a security check and a user warning.

5. The method defined in Claim 1 further comprising the policy module performing a replacement action for the action at run-time.

6. The method defined in Claim 1 wherein the rewritten script program is part of an instrumented version of the document.

7. The method defined in Claim 6 wherein the instrumented version of the document includes hidden script, and further comprising rewriting the hidden script when the hidden script is generated during run-time.

8. The method defined in Claim 1 wherein rewriting the script program comprises:

   passing the document into abstract syntax trees;

performing rewriting on the abstract syntax trees; and
generating instrumented script code and an instrumented document from the abstract syntax trees.

9. The method defined in Claim 1 wherein the one or more policies are dynamically modifiable.

10. The method defined in Claim 1 wherein the one or more policies are expressed as edit automata.

11. The method defined in Claim 1 wherein at least one policy transforms a first action sequence in script program to a second action sequence different than the first action sequence.

12. The method defined in Claim 1 wherein the one or more policies comprise one policy that combines multiple policies into one policy.

13. The method defined in Claim 1 further comprising:

maintaining states relevant to an edit automaton of the policy, including a current state and a complete transition function; and
calling a check function on an action and, in response thereto, advancing the state of the automaton and providing a replacement action for the action.

14. The method defined in Claim 1 wherein the document is an HTML document.

15. The method defined in Claim 1 wherein the script program is one of a group consisting of JavaScript and an ECMAscript-based program.

16. The method defined in Claim 1 wherein downloading the document is performed by a browser or other software that includes an interpreter for JavaScript program or an interpreter for an ECMA script-based program in a client.

17. A proxy comprising:

a policy management module (1401) to implement one or more policies defining safety and security;
a rewriting module (1401) to perform a syntax-directed rewriting process to rewrite a script program embedded in a document prior to run-time and at run-time, wherein the script program comprises self-modifying code, wherein the rewriting module (1401) performs rewriting of the script program by inserting a run-time check into the script program;
an interpretation module (1403) to interpret the script program rewritten by the rewriting module (1401), wherein the run-time check comprises code, which when executed at run-time, causes an expression corresponding to the document to be evaluated at run-time and causes the document generated by the interpretation module at run-time to be sent through the rewriting module, which instruments the script program in the document based on results of evaluating the document and adds code to redirect an action through a policy module during run-time to cause the behavior resulting from execution of the instrument script program to conform to the one or more policies, the one or more policies being expressed as edit automata.

18. The proxy defined in Claim 17 wherein the proxy comprises a part of a browser.

19. The proxy defined in Claim 17 wherein the policy management module and the rewriting module are separate modules.

20. The proxy defined in Claim 17 wherein the policy module maintains states relevant to the edit automaton of the policy, including a current state and a complete transition function.

21. The proxy defined in Claim 20 wherein the policy module is called with a check function on an action and, in response thereto, advances the state of the automaton and provides a replacement action for the action.

22. The proxy defined in Claim 19 wherein the document is downloaded by a browser.

23. The proxy defined in Claim 17 wherein the rewriting module:

parses documents into abstract syntax trees,
performs rewriting on the abstract syntax trees, and
generates instrumented script code and documents from the abstract syntax trees.

24. An article of manufacture having one or more machine-readable media storing instructions which, when executed by a machine, cause the machine to :-

download a document with a script program embedded therein, wherein the script program comprises self-modifying code;
inspect the script program; and
rewrite the script program using a syntax-directed rewriting process prior to run-time and at run-time, wherein rewrite the script program comprises: insert at least one run-time check into the script program wherein the run-time check comprises code, which when executed at run-time causes an expression corresponding to the document to be evaluated at run-time and causes the document to be sent through a rewriting module (1401), which instruments the script program in the document based on results of evaluating the document and adds code to redirect an action through a policy module during run-time to cause behavior resulting from execution of the instrumented script program to conform to one or more policies defining safety and security, the one or more policies being expressed as edit automata.

**Patentansprüche**

1. Verfahren, das 1"olgendes beinhaltet:

Herunterladen eines Dokuments mit einem darin eingebetteten Scriptprogramn, wobei das Scriptprogramm selbstmodifizierenden Code enthält:

Prüfen des Scriptprogramms;
Umschreiben des Scriptprogramms vor der Laufzeit und nährend der Laufzeit mit einem Umschreibmodul (1401) mit einem syntaxgerichteten Umschreibprozess, wobei das Umschreiben des Scriptprogramms Folgendes beinhaltet:

Einfügen eines Laufzeitchecks in das Scriptprogramm, wobei der Laufzeitcheck Code umfasst, der bei Ausführung bewirkt, dass ein dem Dokument entsprechender Ausdruck zur Laufzeit beurteilt wird, und gewirkt, dass das Dokument durch das Unischreibniodul (1401) gesendet wird, das das Scriptprogramm im Dokument zur Laufzeit auf der Basis eines Ergebnisses der Beurteilung des Ausdruckes instrumentiert, und Hinzufügen von Code zum Umleiten einer Aktion durch ein Richtlizzienmodul während der Laufzeitausführung, um zu bewirkten, dass das von der Ausführung des instrumentierten Scriptprogramms resultierende Verhalten einer oder mehreren Schutz und Sicherheit definierenden Richtlinien entspricht, wobei die ein oder mehreren Richtlinien als Edit Automata ausgedrückt werden.

2. Verfahren nach Anspruch 1, wobei der selbstmodifizierende Code dynamisch erzeugten JavaScript enthält.

3. Verfahren nach Anspruch 1, wobei das Umschreiben des Scriptprogramms das Ausführen des Syntax-gerichteten Umschreibprozesses nach Bedarf beinhaltet.

4. Verfahren nach Anspruch 1, wobei der Laufzeitcheck ein oder mehrere aus einer Gruppe bestehend aus einem Sicherheitscheck und einer Benutzerwarnung beinhaltet.

5. Verfahren nach Anspruch 1, das ferner beinhaltet, dass das Richtlinienmodul eine Ersatzaktion für die Aktion zur Laufzeit durchführt.

6. Verfahren nach Anspruch 1. wobei das umgeschriebene Scriptprogramm Teil einer instrumentierten Version des Dokuments ist.

7. Verfahren nach Anspruch 6, wobei die instrumentierte Version des Dokuments verborgenen Script beinhaltet und ferner das Umschreiben des verborgenen Skripts beinhaltet, wenn der verborgen Script während der Laufzeit erzeugt wird.

**8.** Verfahren nach Anspruch 1. wobei das Umschreiben des Scriptprogramms Folgendes beinhaltet:

Parsen des Dokuments in abstrakte Syntax-Bäume;
Durchführen des Umschreibens an den abstrakten Syntax-Bäumene und
Erzeugern von instrumentiertem Scriptcode und einem insirlimentierten Dokument von den abstrakten Syntax-Bäumen.

**9.** Verfahren nach Anspruch 1, wobei die ein oder mehreren Richtlinien dynamisch modifizierbar sind.

**10.** Verfahren nach Anspruch 1. wobei die ein oder mehreren Richtlinien als Edit Automata ausgedrückt werden.

**11.** Verfahren nach Anspruch 1, wobei wenigstens eine Sichtlinie eine erste Aktionssequenz im Scriptprogramm in eine zweite Aktionssequenz umwandelt, die sich von der ersten Aktionssequenz unterscheidet.

**12.** Verfahren nach Anspruch 1, wobei die ein oder mehreren Richtlinien eine Richtlinie umfassen, die mehreren Richtlinien zu einer Richtlinie kombiniert.

**13.** Verfahren nach Anspruch 1, das ferner Folgendes beinhaltet:

Führen von Zuständen, die für ein Edit Automaten der Richtlinie relevant sind, einschließlich eines aktuelle Zustands und einer kompletten Libergangsfunktian, und
Abrufen einer Checkfunktion an einer Aktion und als Reaktion darauf Fortführen des Zustands des Automatons und Bereitstellen einer Ersatzaktion für die Aktion.

**14.** Verfahren nach Anspruch 1, wobei das Dokument ein HTML-Dokument ist.

**15.** Verfahren nach Anspruch 1. wobei das Scriptprogramm eines aus einer Gruppe bestehend aus JavaScript und einem ECMA-Script-basierten Programn ist.

**16.** Verfahren nach Anspruch 1. wobei das Herunterladen des Dokuments mit einem Browser oder sonstiger Software durchgeführt wird, die einen Interpreter für JavaScript,-Programme oder einen Interpreter für ein ECMA-Script-basiertes Programm in einem Client beinhalter.

**17.** Proxy, der Folgendes umfasst:

ein Richtlinienmanagementmodul (1401) zum Implementieren von einer oder mehreren Schutz und Sicherheit definierenden Richtlinien;
ein Umschreibmodul (1401) zum Durchführen eines syntaxgerichteten Uznschreibprozesses zum Umschreiben eines in ein Dokument eingebetteten Scriptprogramms vor der Laufzeit und nährend der Laufzeit, wobei das Scriptprogramm selbstmodifizierenden Code umfasst, wobei das Umschreibmodul (1401) das Umschreiben des Scriptprogramms durch Einfügen eines Laufzeitchecks in das Scriptprogramm durchführt:

ein Interpretationsmodul (1403) zum Interpretieren des vom Umschreibmodul (1401) umgeschriebenen Scriptprogramms,
wobei der Laufzeitcheck Code umfasst, der bei Ausführung zur Laufzeit gewirkt, dass ein dem Dokument entsprechender Ausdruck zur Laufzeit beurteilt wird, und bewirkt, dass das von dem Interpretationsmodul zur Laufzeit erzeugte Dokument durch das Umschreibmodul gesendet wird, das das Scriptprogramm in dem Dokument auf der Basis von Ergebnissen der Beurteilung des Dokuments instrumentiert und Code zum Umleiten einer Aktion durch ein Richtlinienmodul während der Laufzeit hinzufügt, um zu bewirkten, dass das von der Ausführung des Instrument-Scriptprogramms resultierte Verhalten den ein oder mehreren Richtlinien entspricht, wobei die ein oder mehreren Richtlinien als Edit Automata ausgedrückt werden.

**18.** Proxy gemäß Definition in Anspruch 17, wobei der Proxy Teil eines Browsers aufweist.

**19.** Proxy gemäß Definition in Anspruch 17. wobei das Richtlnienmanagementmodul und das Umschreibmodul separate module sind.

**20.** Proxy gesäß Definition in Anspruch 17, wobei das Richtlinienmodul Zustände führt, die für das Edit Automaten der Richtlinie relevant sind, einschließlich eines aktuellen zustands oder einer kompletten Übergangsfunktion.

**21.** Proxy gemäß Definition in Anspruch 20, wobei das Richtlinienmodul mit einer Checkfunktion an einer Aktion abgerufen wird, und als Reaktion darauf den Zustand des Automatons fortführt und eine Ersatzaktion für die Aktion bereitstellt.

**22.** Proxy gemäß Definition in Anspruch 19, wobei das Dokument von einem Browser heruntergeladen wird.

**23.** Proxy gemäß Definition in Anspruch 17, wobei das Umschreibmodul:

Dokumente in abstrakte Syntax-Bäume parst,
das Umschreiben an den abstrakten Syntax-Bäumen durchführt, und
instrumentierten Scriptcode und Dokumente von den abstrakten Syntax-Bäumen erzeugt.

**24.** Herstellungsartiliel mit einem oder mehreren maschinenlesbaren Medien, die Befehl speichern, die bei Ausführung durch eine Maschine bewirkten, dass die Maschine:

ein Dokument mit einem darin eingebetteten Scriptprogramm herunterlädt, wobei das Scriptprogramm selbstmodifizierenden Code enthält;
das Scriptprogramm prüft; und
das Scriptprogramm vor der Laufzeit und nährend der Laufzeit mit einem Syntax-gerichteten Umschreibprozess umschreibt, wobei das Umschreiben des Scriptprogramms Folgendes beinhaltet: Einfügen wenigstens eines Laufzeitchecks in das Scriptprogramm, wobei der Laufzeitcheck Code umfasst, der bei Ausführung zur Laufzeit gewirkt, dass ein dem Dokument entsprechender Ausdruck zur Laufzeit beurteilt wird, und bewirkt, dass das Dokument durch ein Umschreibmodul (1401) gesendet wird, das das Scriptprogramm in dem Dokument auf der Basis von Ergebnissen der Beurteilung des Dokuments instrumentiert und Code zum Umleiten einer Aktion durch ein Richtlinieninodul während der Laufzeit hinzufügt, um zu bewirken, dass das von der Ausführung des instrumentierten Scriptprogramms resultierende Verhalten ein oder mehreren Schutz und Sicherheit definierenden Richtlinien entspricht, wobei die ein oder mehreren Richtlinien als Edit Automata ausgedrückt werden.

**Revendications**

**1.** Un procédé comprenant :

le téléchargement d'un document avec un programme de script imbriqué dans celui-ci, où le programme de script contient du code d'auto-modification,
l'inspection du programme de script,
la réécriture, par un module de réécriture (1401) utilisant un processus de réécriture dirigée par la syntaxe, du programme de script avant l'exécution et pendant l'exécution, où la réécriture du programme de script comprend :

l'insertion d'un contrôle d'exécution dans le programme de script, le contrôle d'exécution contentant du code, qui, lorsqu'il est exécuté, amène une expression correspondant au documents à être évaluée au moment de l'exécution et amène le document à envoyé par l'intermédiaire du module de réécriture (1401), qui instrumente le programme de script dans le document au moment de l'exécution en fonction d'un résultat d'une évacuation de l'expression, et l'ajout de code de façon à rediriger une action au travers d'un module de politique pendant l'exécution de façon à amender un comportement résultant de l'exécution du programme de script instrumenté à être conforme à une ou plusieurs politiques définissant la sûreté et la sécurité, les une ou plusieurs politiques étant exprimée sous la forme d'automates d'édition.

**2.** Le procédé selon la Revendication 1 où le code d'auto-modification contient du JavaScript généré dynamiquement.

**3.** Le procédé selon la Revendication 1 où la réécriture du programme de script comprend l'exécution du processus de réécriture dirigée par la syntaxe à la demande.

**4.** Le procédé selon la Revendication 1 où le contrôle d'exécution comprend une ou plusieurs opérations d'un groupe se compostant d'un contrôle de sécurité et d'un avertissement de l'utilisateur.

**5.** Le procédé selon la Revendication 1 comprenant en outre l'exécution par le module de politique d'une action de replacement pour l'action au miment de l'exécution.

**6.** Le procédé selon la Revendication 1 où le programme de script réécrit fait partie de une version instrumentée du document.

**7.** Le procédé selon la Revendication 6 où la version instrumentée du document contient un script caché et comprend en outre une réécriture du script caché lorsque le script caché est généré pendant l'exécution.

**8.** Le procédé selon la Revendication 1 où la réécriture du programmé de script comprend :

l'analyse du document en arbres syntaxiques abstraits,
l'exécution d'une réécriture sur les arbres syntaxiques abstraits, et
la génération de code de script instrumenté et d'un document instrumenté à partir des arbres syntaxiques abstraits.

**9.** Le procédé selon la Revendication 1 où les une ou plusieurs politiques sont modifiables dynamiquement.

**10.** Le procédé selon la Revendication 1 où les une ou plusieurs politiques sont exprimées sous la forme d'automates d'édition.

**11.** Le procédé selon la Revendication 1 où au moins une politique transforme une première séquence d'actions en un programmé de script vers une deuxième séquence d'actions différente de la première séquence d'actions.

**12.** Le procédé selon la Revendication 1 où les une ou plusieurs politiques comprennent une politique qui combine plusieurs politiques en une politique.

**13.** Le procédé selon la Revendication 1 comprenant en outre :

l'entretien d'états pertinents pour un automate d'édition de la politique, comprenant un état actuel et une fonction de transition complète, et
l'appel d'une fonction de contrôle sur une action et, en réponse à celui-ci, l'avancement de l'état de l'automate et la fourniture d'une action de replacement pour l'action.

**14.** Le procédé selon la Revendication 1 où le document est un document HTML.

**15.** Le procédé selon la Revendication 1 où le programme de script est un élément d'un groupe se compostant de JavaScript et d'un programme basé sur un script ECMA.

**16.** Le procédé selon la Revendication 1 où le téléchargement du document est exécuté par un navigateur ou un autre logiciel qui comprend un interpréteur pour un programme JavaScript ou un interpréteur pour un programme basé sur un script ECMA dans un client.

**17.** Un mandataire comprenant :

un module de gestion de politiques (1401) destiné à mettre en oeuvre une ou plusieurs politiques définissant la sûreté et la sécurité,
un module de réécriture (1401) destiné à exécuteur un processus de réécriture dirigée par la syntaxe de façon à réécrire un programme de script imbrique dans un document avant l'exécution et pendant l'exécution, où le programme de script contient du code d'auto-modification, où le module de réécriture (1401) exécute la réécriture du programme de script par l'insertion d'un contrôle d'exécution dans le programme de script,
une module d'interprétation (1403) destiné à interpréteur le programme de script réécrit par le module de réécriture (1401),
où le contrôle d'exécution contient du code, qui, lorsqu'il est exécuté au montent de l'exécution, amène une expression correspondant au document à être évaluée au moment de l'exécution et amène le document généré par le module d'interprétation au moment de l'exécution à être envoyé par l'intermédiaire du module de réécriture, qui instrumente le programmé de script dans le document en fonction de résultats d'une évaluation du document, et ajoute du code de façon à rediriger une action au travers d'un module de politique pendant l'exécution de façon à amener le comportement résultant de l'exécution du programme de script instrumenté à être conforme aux une ou plusieurs politiques, les une ou plusieurs politiques étant exprimés sous la forme d'automates d'édition.

**18.** Le mandataire selon la Revendication 17 où le mandataire comprend une partie d'un navigateur.

**19.** Le mandataire selon la Revendication 17 où le module de gestion de politiques et le module de réécriture sont des modules distincts.

**20.** Le mandataire selon la Revendication 17 où le module de politique entretient des états pertinents pour l'automate d'édition de la politique, comprenant un état actuel et une fonction de transition complète.

**21.** Le mandataire selon la Revendication 20 où le module de politique est appelé avec une fonction de contrôle sur une action et, en réponse à cet appel, il avance l'état de l'automate et fournit une action de remplacement pour l'action.

**22.** Le mandataire selon la Revendication 19 où le document est téléchargé par un navigateur.

**23.** Le mandataire selon la Revendication 17 où le module de réécriture :

analyse des documents en arbres syntaxiques abstraites,
exécute une réécriture sur les arbres syntaxiques abstraits, et
génère du code de script instrumenté et des documents à partir des arbres syntaxiques abstraits.

**24.** Un article manufacturé possédant un ou plusieurs supports lisibles par ordinateur contentant en mémoire des instructions qui, lorsqu'elles sont exécutées par un ordinateur, amènent l'ordinateur à :

télécharger un document avec un programme de script imbriqué dans celui-ci, où le programme de script contient du code d'auto-modification,
inspecteur le programme de script, et
réécrire le programme de script au moyen d'un processus de réécriture dirigée par la syntaxe avant l'exécution et pendant l'exécution, où la réécriture du programme de script comprend : l'insertion d'au moins un contrôle d'exécution dans le programme de script, où le contrôle d'exécution contient du code, qui, lorsqu'il est exécuté au moment de l'exécution, amène une expression correspondant au document à être évaluée au moment de l'exécution et amène le document à être envoyé par l'intermédiaire d'un module de réécriture (1401), qui instrumente le programme de script dans le document en fonction de résultats d'une évaluation du document et ajoute du code de façon à rediriger une action au travers d'un module de politique pendant l'exécution de façon à amener un comportement résultant de l'exécution du programme de script instrumenté à être conforme à une ou plusieurs politiques définissant la sûreté et la sécurité, les une ou plusieurs politiques étant exprimées sous la forme d'automates d'édition.

```
<html>
  <head>...</head>
  <body>
    <p>
      <script>
      var name=parseName(document.cookie);
      document.write("Greetings, " + name + "!");
      </script>
      It is <em>great</em> to see you!
    </p>
  </body>
</html>
```

Figure 1

*Script fragment:*

```
var i = 1;
document.write("<script> i=2; document.write(i); </scr" + "ipt>" + i);
```

*Output:* 21

*Script fragment:*

```
var i = 1;
document.write("<script> i=2; document.write(i); </scr" + "ipt>");
document.write(i);
```

*Output:* 22

Figure 2

22

```
┌─────────────────────────────────────────────────┐
│     Download a document with a script program    │
│                embedded therein                   │
│                                                   │
│                      301                          │
└─────────────────────────────────────────────────┘
                          │
┌─────────────────────────────────────────────────┐
│     Inspect the script program in the document    │
│                                                   │
│                      302                          │
│                                                   │
└─────────────────────────────────────────────────┘
                          │
┌─────────────────────────────────────────────────┐
│     Rewrite the script program to cause behavior  │
│  resulting from execution of the script to conform to │
│   one or more policies defining safety and security │
│                      303                          │
└─────────────────────────────────────────────────┘
```

# Figure 3A

Figure 3B

$$
\begin{array}{ll}
(\textit{World}) & W ::= (\Sigma, \chi, B, C) \\[4pt]
(\textit{Document Bank}) & \Sigma ::= \{[l = D]^*\} \\
(\textit{Variable Bank}) & \chi ::= \{[x = D]^*, [f = (\vec{x})P]^*\} \\
(\textit{Browser}) & B ::= \{[h = D \in d]^*\} \\
(\textit{Cookie Bank}) & C ::= \{[d = D]^*\} \\[4pt]
(URL) & l ::= d.p \\
(\textit{Domain}) & d ::= string \\
(\textit{Path}) & p ::= string \\
(\textit{Handle}) & h ::= string \\[4pt]
(\textit{Document}) & D ::= string \mid js\ P \mid F\ \vec{D} \\
(\textit{Value Document}) & D^v ::= string \mid F\ \vec{D^v} \\
(\textit{Format}) & F ::= \texttt{jux} \mid \texttt{p} \mid \texttt{em} \mid \texttt{b} \mid \texttt{i} \mid \texttt{h1} \mid \texttt{h2} \mid \ldots \\[4pt]
(\textit{Script}) & P ::= \texttt{skip} \mid x = E \mid P; P \mid \texttt{if } E \texttt{ then } P \texttt{ else } P \\
& \qquad \mid \texttt{while } E \texttt{ do } P \mid f(\vec{E}) \mid \texttt{act}(A) \mid \texttt{write}(E) \\
(\textit{Expression}) & E ::= x \mid D \mid op(\vec{E}) \\[4pt]
(\textit{Action}) & A ::= \epsilon \mid \texttt{newWin}(x, E) \mid \texttt{closeWin}(E) \mid \texttt{loadURL}(E) \\
& \qquad \mid \texttt{readCki}(x) \mid \texttt{writeCki}(E) \mid \texttt{secOp}(\vec{E}) \\
(\textit{Value Action}) & A^v ::= \epsilon \mid \texttt{newWin}(\_, D) \mid \texttt{closeWin}(D) \mid \texttt{loadURL}(D) \\
& \qquad \mid \texttt{readCki}(\_) \mid \texttt{writeCki}(D) \mid \texttt{secOp}(\vec{D})
\end{array}
$$

Figure 4

$$\boxed{\chi \vdash E \Downarrow D}$$

$$\overline{\chi \vdash x \Downarrow \chi(x)} \tag{1}$$

$$\overline{\chi \vdash D \Downarrow D} \tag{2}$$

$$\frac{\chi \vdash \vec{E} \Downarrow \vec{D}}{\chi \vdash op(\vec{E}) \Downarrow \hat{op}(\vec{D})} \tag{3}$$

$$\boxed{\chi \vdash A \Downarrow A^v}$$

$$\overline{\chi \vdash \epsilon \Downarrow \epsilon} \tag{4}$$

$$\frac{\chi \vdash E \Downarrow D}{\chi \vdash \texttt{newWin}(x.E) \Downarrow \texttt{newWin}(\_.D)} \tag{5}$$

$$\frac{\chi \vdash E \Downarrow D}{\chi \vdash \texttt{closeWin}(E) \Downarrow \texttt{closeWin}(D)} \tag{6}$$

$$\frac{\chi \vdash E \Downarrow D}{\chi \vdash \texttt{loadURL}(E) \Downarrow \texttt{loadURL}(D)} \tag{7}$$

$$\overline{\chi \vdash \texttt{readCki}(x) \Downarrow \texttt{readCki}(\_)} \tag{8}$$

$$\frac{\chi \vdash E \Downarrow D}{\chi \vdash \texttt{writeCki}(E) \Downarrow \texttt{writeCki}(D)} \tag{9}$$

$$\frac{\chi \vdash \vec{E} \Downarrow \vec{D}}{\chi \vdash \texttt{secOp}(\vec{E}) \Downarrow \texttt{secOp}(\vec{D})} \tag{10}$$

Figure 5

$$\boxed{W \leadsto^* W' : \vec{A^v}}$$

$$\overline{W \leadsto^* W : \epsilon} \tag{11}$$

$$\frac{W \leadsto W' : A^v \qquad W' \leadsto^* W'' : \vec{A^v}}{W \leadsto^* W'' : A^v \vec{A^v}} \tag{12}$$

$$\boxed{W \leadsto W' : A^v}$$

$$\frac{W = (\Sigma, \chi, B.C) \qquad B = \{h_i = D_i \in d_i\}^{i=\{1...n\}}}{\text{Pick any } j: \qquad h_j \vdash W \leadsto W' : A^v} \tag{13}$$
$$\overline{\phantom{xxxxxxxxxxxxx} W \leadsto W' : A^v \phantom{xxxxxxxxxxxxx}}$$

$$\boxed{h \vdash W \leadsto W' : A^v}$$

$$\frac{\begin{array}{l} B(h) = D \in d \qquad focus(D) = P \\ step(P, h, (\Sigma, \chi, B, C)) = W \\ A^v = \left\{ \begin{array}{ll} A_1^v & \text{if } P = \texttt{act}(A) \text{ and } \chi \vdash A \Downarrow A_1^v \\ \epsilon & \text{if } P \neq \texttt{act}(A) \end{array} \right. \end{array}}{h \vdash (\Sigma, \chi, B, C) \leadsto W : A^v} \tag{14}$$

Figure 6

$focus(D) = P$
$stepDoc(D, \chi) = D'$

| If $D =$ | then $focus(D) =$ | and $stepDoc(D, \chi) =$ |
|---|---|---|
| $js\ P$ where $P \in \{\text{skip}, x = E, \text{act}(A)\}$ | $P$ | $\epsilon$ (empty string) |
| $js\ \text{write}(E)$ | $\text{write}(E)$ | $D$ where $\chi \vdash E \Downarrow D$ |
| $js\ P_1; P_2$ | $focus(js\ P_1)$ | $\text{jux}\ D\ (js\ P_2)$ where $D = stepDoc(js\ P_1, \chi)$ |
| $js\ \text{if}\ E\ \text{then}\ P_1\ \text{else}\ P_2$ | $\text{if}\ E\ \text{then}\ P_1\ \text{else}\ P_2$ | $js\ P_1$ if $\chi \vdash E \Downarrow \text{true}$<br>$js\ P_2$ if $\chi \vdash E \Downarrow \text{false}$ |
| $js\ \text{while}\ E\ \text{do}\ P$ | $\text{while}\ E\ \text{do}\ P$ | $js\ \text{if}\ E\ \text{then}\ (P; \text{while}\ E\ \text{do}\ P)$ else skip |
| $js\ f(\vec{E})$ | $f(\vec{E})$ | $js\ P[\vec{D}/\vec{x}]$ where $\chi \vdash \vec{E} \Downarrow \vec{D}$ and $\chi(f) = (\vec{x})P$ |
| $F\ \vec{D^v} D' \vec{D}$ where $D'$ is not a value document | $focus(D')$ | $F\ \vec{D^v} D'' \vec{D}$ where $D'' = stepDoc(D', \chi)$ |

$step(P, h, W) = W'$

| If $P =$ | then $step(P, h, (\Sigma, \chi, B, C)) =$ | | | | |
|---|---|---|---|---|---|
| $\text{act}(\epsilon)$ | $(\Sigma,$ | $\chi,$ | $adv(B, h, \chi),$ | $C)$ | |
| $\text{act}(\text{newWin}(x, E))$ | $(\Sigma,$ | $\chi\{x = h'\},$ | $B'\{h' = D \in d\},$ | $C)$ | where $\chi \vdash E \Downarrow d.p$<br>$B' = adv(B, h, \chi$<br>$\Sigma(d.p) = D$<br>$h'$ is fresh |
| $\text{act}(\text{closeWin}(E))$ | $(\Sigma,$ | $\chi,$ | $B' - \{h'\},$ | $C)$ | where $\chi \vdash E \Downarrow h'$<br>$B' = adv(B, h, \chi$ |
| $\text{act}(\text{loadURL}(E))$ | $(\Sigma,$ | $\chi,$ | $B\{h = D \in d\},$ | $C)$ | where $\chi \vdash E \Downarrow d.p$<br>$\Sigma(d.p) = D$ |
| $\text{act}(\text{readCki}(x))$ | $(\Sigma,$ | $\chi\{x = C(d)\},$ | $adv(B, h, \chi),$ | $C)$ | where $B(h) = D \in d$ |
| $\text{act}(\text{writeCki}(E))$ | $(\Sigma,$ | $\chi,$ | $adv(B, h, \chi),$ | $C\{d = D\})$ | where $\chi \vdash E \Downarrow D$<br>$B(h) = D \in d$ |
| $\text{act}(\text{secOp}(\vec{E}))$ | | | $\ldots$ | | |
| $x = E$ | $(\Sigma,$ | $\chi\{x = D\},$ | $adv(B, h, \chi),$ | $C)$ | where $\chi \vdash E \Downarrow D$ |
| other $P$ | $(\Sigma,$ | $\chi,$ | $adv(B, h, \chi),$ | $C)$ | |

where $\quad adv(B, h, \chi) = B\{h = stepDoc(D, \chi) \in d\}$ if $B(h) = D \in d$

**Figure 7**

EP 2 035 996 B1

$$\boxed{\Pi \vdash \vec{A}}$$

$$\frac{q \in \{\texttt{accept state}\}}{(Q, q, \delta) \vdash \epsilon} \tag{15}$$

$$\frac{\delta(q, A) = (q', A) \qquad (Q, q', \delta) \vdash \vec{A}}{(Q, q, \delta) \vdash A\vec{A}} \tag{16}$$

$$\boxed{\Pi \vdash \vec{A} \Rightarrow \vec{A}'}$$

$$\frac{}{\Pi \vdash \epsilon \Rightarrow \epsilon} \tag{17}$$

$$\frac{\delta(q, A) = (q', A') \qquad (Q, q', \delta) \vdash \vec{A} \Rightarrow \vec{A}'}{(Q, q, \delta) \vdash A\vec{A} \Rightarrow A'\vec{A}'} \tag{18}$$

Figure 8

$\delta(q, A) = (q', A')$      $\delta(q, A) = (q', A)$      $\delta(q, A) = (q, A)$

Figure 9

Figure 10

Figure 11

$$\boxed{\iota(P) = P'}$$

$$\overline{\iota(\mathtt{write}(E)) = \mathtt{instr}(E)} \tag{19}$$

$$\overline{\iota(\mathtt{act}(A)) = \mathtt{check}(A)} \tag{20}$$

$$\overline{\iota(P_1; P_2) = \iota(P_1); \iota(P_2)} \tag{21}$$

$$\overline{\iota(\mathtt{if}\ E\ \mathtt{then}\ P_1\ \mathtt{else}\ P_2) = \mathtt{if}\ E\ \mathtt{then}\ \iota(P_1)\ \mathtt{else}\ \iota(P_2)} \tag{22}$$

$$\overline{\iota(\mathtt{while}\ E\ \mathtt{do}\ P) = \mathtt{while}\ E\ \mathtt{do}\ \iota(P)} \tag{23}$$

$$\frac{P \in \{\mathtt{skip}, x = E, f(\vec{E}), \mathtt{instr}(E), \mathtt{check}(A)\}}{\iota(P) = P} \tag{24}$$

$$\boxed{\iota(D) = D'}$$

$$\overline{\iota(string) = string} \tag{25}$$

$$\overline{\iota(js\ P) = js\ \iota(P)} \tag{26}$$

$$\frac{\iota(\vec{D}) = \vec{D}'}{\iota(F\ \vec{D}) = F\ \vec{D}'} \tag{27}$$

$$\boxed{\iota(\Sigma) = \Sigma'}$$

$$\overline{\iota(\{(l = D)^{\bullet}\}) = \{(l = \iota(D))^{\bullet}\}} \tag{28}$$

$$\boxed{\iota(\chi) = \chi'}$$

$$\overline{\iota(\{[x = D]^{\bullet}, [f = (\vec{x})P]^{\bullet}\}) = \{[x = \iota(D)]^{\bullet}, [f = (\vec{x})\iota(P)]^{\bullet}\}} \tag{29}$$

$$\boxed{\iota(B) = B'}$$

$$\overline{\iota(\{(h = D \in d)^{\bullet}\}) = \{(h = \iota(D) \in d)^{\bullet}\}} \tag{30}$$

$$\boxed{\iota(C) = C'}$$

$$\overline{\iota(\{[d = D]^{\bullet}\}) = \{[d = \iota(D)]^{\bullet}\}} \tag{31}$$

$$\boxed{\iota(W) = W'}$$

$$\overline{\iota((\Sigma, \chi, B, C)) = (\iota(\Sigma), \iota(\chi), \iota(B), \iota(C))} \tag{32}$$

**Figure 12**

28

$$\frac{\vdash_\delta (W, q) \leadsto^* (W'. q') : \vec{A}^v}{\vdash_\delta (W, q) \leadsto^* (W, q) : \epsilon} \quad (33)$$

$$\frac{\vdash_\delta (W, q) \leadsto (W', q') : A^v \qquad \vdash_\delta (W', q') \leadsto^* (W'', q'') : \vec{A}^v}{\vdash_\delta (W. q) \leadsto^* (W'', q'') : A^v \vec{A}^v} \quad (34)$$

$$\boxed{\vdash_\delta (W, q) \leadsto (W', q') : A^v}$$

$$\frac{W = (\Sigma, \chi, B. C) \qquad B = \{h_i = D_i \in d_i\}^{i=\{1...n\}}}{\text{Pick any } j : \qquad h_j \vdash_\delta (W, q) \leadsto (W', q') : A^v}{\vdash_\delta (W. q) \leadsto (W'. q') : A^v} \quad (35)$$

$$\boxed{h \vdash_\delta (W, q) \leadsto (W', q') : A^v}$$

$$\frac{\begin{array}{c} B(h) = D \in d \qquad focus(D) \neq \text{check}(A) \\ h \vdash (\Sigma, \chi, B. C) \leadsto W : A^v \end{array}}{h \vdash_\delta ((\Sigma, \chi, B, C), q) \leadsto (W, q) : A^v} \quad (36)$$

$$\frac{\begin{array}{c} B(h) = D \in d \qquad focus(D) = \text{check}(A) \\ \chi \vdash A \Downarrow A_1^v \qquad \delta(q, A_1^v) = (q', A^v) \\ step(\text{act}(A^v), h, (\Sigma, \chi. B, C)) = W \end{array}}{h \vdash_\delta ((\Sigma, \chi, B, C), q) \leadsto (W, q') : A^v} \quad (37)$$

Figure 13

Figure 14

1500

Figure 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IL 2005000915 W
- WO 2006025050 A
- WO 2007011579 A2

**Non-patent literature cited in the description**

- Edit Automata: Enforcement Mechanisms for Run Time Security Policies. **J. Ligatti et al.** International Journal of Information Security. Springer-Verlag DE, vol. 4, 2-16
- **Maebe J et al.** Instrumenting self modifying code. *5th International Workshop on Automated and Algorithmic Debugging,* 01 September 2003, 103-114